# EUROPÄISCHE PATENTSCHRIFT

(11) **EP 2 253 024 B1**
(45) Veröffentlichungstag und Bekanntmachung des Hinweises auf die Patenterteilung: **15.06.2011**
(21) Anmeldenummer: 09709703.4
(22) Anmeldetag: 15.02.2009
(51) Int. Cl.: H01L 31/058, F24J 2/04, F24J 2/24, E04D 13/18

(54) **Energieversorgungsvorrichtung mit als Dachziegel ausgestalteten Energiepanels**
Energy supply device with energy panels in the form of roof tiles
Dispositif d'alimentation en énergie comportant des panneaux énergétiques conçus sous forme de tuiles

(30) Priorität: 15.02.2008 EP 08151538
(43) Veröffentlichungstag der Anmeldung: 24.11.2010
(73) Patentinhaber: Panotron AG, 3422 Kirchberg (CH)
(72) Erfinder: BIERI, Martin, CH-4539 Rumisberg (CH)
(74) Vertreter: Rutz & Partner
(86) Internationale Anmeldenummer: PCT/EP2009/051742
(87) Internationale Veröffentlichungsnummer: WO 2009/101196

(56) Entgegenhaltungen:
- EP-A- 0 335 261
- DE-A1-102004 021 028
- JP-A- 2005 241 021
- US-A1- 2002 121 298

## Beschreibung

Die Erfindung betrifft eine Energieversorgungsvorrichtung mit mehreren als Dachziegel ausgestalteten Energiepanels sowie ein als Dachziegel ausgestaltetes Energiepanel.

Energiepanels dienen der Aufnahme von Energie, die im Energiepanel in Wärmeenergie und/oder elektrische Energie umgewandelt und die an einen oder mehrere Verbraucher abgegeben wird. Eine Energieversorgungsvorrichtung besteht aus einem oder mehreren miteinander gekoppelter Energiepanel.

Eine Vorrichtung mit einem Energiepanel ist beispielsweise aus [1], JP 2005 241021 A, bekannt. Bei diesem Panel wird die Wärmeenergie mittels einer Rohrstruktur abgeführt, die zwei zueinander parallele grössere Rohre aufweist, die durch senkrecht dazu verlaufende kleinere Rohre miteinander verbunden sind. Die kleineren Rohre liegen direkt am Energiepanel an und führen die abgenommene Wärmeenergie über die Rohrstruktur ab. Derartige Vorrichtungen sind für Dachaufbauten jedoch ungeeignet.

Ein gattungsgemässes Energiepanel ist hingegen aus [2], EP 0 335 261 B1 bekannt. Dieses Energiepanel, umfasst einen Körper in der Form eines Dachziegels oder eines äusseren Wandbestandteils, eine Mehrzahl von Solarzellen, von denen jede an einer äusseren, Sonnenstrahlen ausgesetzten Oberfläche des Ziegels oder Wandbestandteils angeordnet ist, sowie einen Durchgangsweg für ein Wärmetransportmedium. Dieser Durchgangsweg liegt unter demjenigen Gebiet des Ziegels oder Wandbestandteils, an dem die Solarzellen angeordnet sind. Der Körper des Energiepanels ist aus einem Verbundstoff eines teilchenförmigen, anorganischen, körnigen oder faserigen Materials und eines wärmeleitenden Metalls hergestellt.

Das aus [2] bekannte Energiepanel, dessen Prinzip sich weitgehend durchgesetzt hat, sowie Vorrichtungen und Systeme, die auf diesen Energiepanels basieren, weisen verschiedene Nachteile auf. Aufgrund der Integration der Sonnenzellen und des Durchgangswegs für das Energietransportmedium in das Energiepanel resultiert ein relativ komplexer Aufbau des Energiepanels mit einem entsprechend hohen Herstellungsaufwand. Der Heizmitteldurchgangsweg, ein Kanal oder eine Rohrleitung, muss in das Energiepanel eingebettet und an dessen Eintrittsöffnung und Austrittsöffnung mit Kopplungselementen versehen sein, die es erlauben, die Durchgangswege mehrerer Energiepanel zu einer einzigen Rohrleitung bzw. einem einzigen Kanal zusammenzuschliessen, der vom Wärmetransportmedium durchflossen wird. Sofern zahlreiche solche Energiepanel zur Abdeckung eines Daches verwendet werden, resultiert somit eine hohe Anzahl von Kopplungspunkten, die auch nach längerer Betriebsdauer und mehrmaliger Betätigung noch dicht sein müssen. Weiterhin ist zu beachten, dass nur relativ dünne Rohrleitungen einsetzbar sind, weshalb ein relativ hoher Leitungswiderstand und ein entsprechend hoher Leitungsdruck resultiert, der hohe Anforderungen an die Qualität der Kopplungspunkte stellt. Sollten einzelne der Kopplungspunkte, beispielsweise nach mehrjähriger Betriebsdauer, ausfallen, so resultiert ein sehr hoher Wartungsaufwand. Einerseits ist die Fehlerstelle zu lokalisieren, andererseits ist der Defekt mit relativ grossem Aufwand zu beheben. Aufgrund des kleinen Durchmessers der Rohrleitung kann ferner nur eine geringe Menge von Heizmittel die miteinander gekoppelten Energiepanel durchfliessen, weshalb kein optimaler Wärmetransfer gewährleistet ist.

Aufgrund des mangelhaften Wärmetransfers resultiert nicht nur ein ungenügender Ertrag an Wärmeenergie, sondern auch eine nicht optimale Nutzung der Energiezellen, die bei höheren Temperaturen weniger elektrische Leistung abgeben.

Der vorliegenden Erfindung liegt daher die Aufgabe zugrunde, eine verbesserte Energieversorgungsvorrichtung mit wenigstens einem Energiepanel sowie ein verbessertes Energiepanel zu schaffen.

Insbesondere ist eine Energieversorgungsvorrichtung mit wenigstens einem Energiepanel zu schaffen, welche Sonnenenergie effizient in thermische und elektrische Energie umwandelt.

Die Energieversorgungsvorrichtung und die Energiepanel sollen zudem mit reduziertem Aufwand hergestellt, installiert und gewartet werden können.

Weiterhin soll die Energieversorgungsvorrichtung neue und vorteilhafte Leistungsmerkmale zur Verfügung stellen. Insbesondere soll die Energieversorgungsvorrichtung effizient und mit minimalem Aufwand verwaltet werden können

Diese Aufgabe wird mit einer Energieversorgungsvorrichtung mit sowie mit einem Energiepanel gelöst, welche die in Anspruch 1 bzw. 8 angegebenen Merkmale aufweisen. Vorteilhafte Ausgestaltungen der Erfindung sind in weiteren Ansprüchen angegeben.

Die Energieversorgungsvorrichtung weist mehrere als Dachziegel ausgestaltete Energiepanel auf, durch die ein Teil eines Gebäudes abgedeckt wird und die ein der Aufnahme von Solarenergie dienendes Energiemodul aufweisen, das mit einer Stromversorgungsleitung verbunden ist.

Erfindungsgemäss ist an einer Aussenseite des Gebäudes wenigstens eine metallene Rohrleitung vorgesehen, welche die Energiepanel trägt, die mechanisch und thermisch mit der Rohrleitung verbunden sind, in der ein der Aufnahme der Stromversorgungsleitung dienender Kabelkanal und wenigstens ein Flüssigkeitskanal vorgesehen sind, durch den ein flüssiges Wärmetransportmedium führbar ist, durch das thermische Energie vom Energiepanel zu einer Wärmeenergiesenke transferierbar ist.

Die für den Wärmetransport vorgesehene, vorzugsweise horizontal zu montierende Rohrleitung, vorzugsweise ein Aluminiumprofil, ersetzt eine Lattung auf dem Dach oder einer Gebäudewand und wird beispielsweise an den senkrecht dazu verlaufenden Sparren des Dachstuhls montiert. Die Rohrleitung erfüllt daher eine Doppelfunktion. Einerseits dient sie der im Vergleich zu Holzlattung stabileren Montage der Energiepanel. Andererseits dient sie der Aufnahme und dem Abtransport der von den Energiepanels abgegebenen Wärmeenergie. Die Mehrkosten, die im Vergleich zu einer konventionellen Dachlattung resultieren, sind relativ gering und werden durch die reduzierten Herstellungskosten für die Energiepanel mehr als kompensiert. Zudem resultiert mit dem installierten Rohrleitungssystem eine äusserst stabile und zuverlässige Konstruktion, die auch schlechtesten Wetterbedingungen standhält. Aufgrund des relativ grossen Querschnitts der Rohrleitung resultiert ein ausgezeichneter Wärmetransfer.

Besonders vorteilhaft ist auch, dass anhand des erfindungsgemässen Rohrleitungssystems, die Energiepanel, insbesondere darin vorgesehene elektrische Module, das Gebäudedach oder eine Gebäudewand gekühlt werden können. Zu diesem Zweck kann das Wärmetransportmittel in einer Kühlzone, beispielsweise im Erdboden auf tiefe Temperaturen gekühlt werden, bevor es in den Rohrleitungen in den Bereich der Energiepanel gelangt. Durch diese Massnahme gelingt eine äusserst effiziente und kostengünstige Kühlung des Gebäudes, so dass auf Kühlaggregate verzichtet werden kann, die üblicherweise einen hohen Energieverbrauch aufweisen. Beispielsweise kann im Sommer die Erdsonde einer Wärmepumpe zur Zirkulation des Wärmetransportmittels verwendet werden.

Besonders vorteilhaft bei der erfindungsgemässen Energieversorgungsvorrichtungen ist, dass das metallene Rohrleitungssystem sowie die zumindest teilweise aus Metall bestehenden Energiepanel die Einwohner des betreffenden Gebäudes gegen Einwirkungen von Strahlungen und Elektrosmog, im entsprechenden Ausgestaltungen sogar gegen Blitzschlag schützen. Die heute vielfach gefürchtete Einstrahlung von Hochfrequenzwellen wird daher vorteilhaft abgewehrt.

Die Ankopplung der Energiepanel an die Rohrleitung kann mit einfachen Massnahmen erfolgen, wobei ein praktisch vernachlässigbar geringer Wärmeübergangswiderstand resultiert. Die vom Energiepanel aufgenommene Wärmeenergie wird daher effizient an die Rohrleitung übertragen und von dieser abgeführt. Damit ergibt sich auch eine gute Kühlung der Energiepanels, weshalb die Energiezellen, gegebenenfalls Solarzellen, optimal arbeiten und maximale elektrische Energie abgeben können.

In einer vorzugsweisen Ausgestaltung weist die Rohrleitung wenigstens einen ersten Flüssigkeitskanal, in dem das Wärmetransportmedium in eine Richtung geführt wird, und wenigstens einen zweiten Flüssigkeitskanal auf, in dem das Wärmetransportmedium zurückgeführt wird. An einem Ende der Rohrleitung ist daher ein Abschlussstück vorhanden, durch das das aus dem ersten Flüssigkeitskanal eintreffende Wärmetransportmedium in den zweiten Flüssigkeitskanal überführt wird. Am anderen Ende der Rohrleitung kann das Wärmetransportmedium somit an derselben Stelle zugeführt und entnommen werden. Bei dieser Ausgestaltung der Rohrleitung kann das gesamte Rohrleitungssystem einfach geplant und aufgebaut werden. Die Führung des Wärmetransportmediums in beide Richtungen innerhalb der Rohrleitung führt auch zur Ausmittelung der Temperaturen die an unterschiedlichen Stellen der Rohrleitung auftreten können.

Vorteilhaft kann es sein, das Rohrleitungssystem in Segmente aufzuteilen, die unabhängig voneinander je mit einer Umwälzpumpe betrieben werden. Vorzugsweise werden die Segmente derart gebildet, dass sie einzelnen Zonen der Sonnenbestrahlung zugeordnet sind. Beispielsweise kann ein erstes Segment des Rohrleitungssystems auf der südlichen Seite des Satteldachs und ein zweites Segment an der Westwand eines Hauses angeordnet werden. Die Trennung der genannten Segmente erspart entsprechende Verbindungsleitungen und ist bereits aus diesem Grund sinnvoll. Die Trennung ist jedoch auch deshalb sinnvoll, weil die betreffenden Segmente jeweils zu der Zeit betrieben werden können, in der für jedes Segment die optimale Sonnenbestrahlung vorliegt.

Als Wärmetransportmedium eignet sich Wasser. Die vorteilhafte Ausgestaltung der erfindungsgemässen Energieversorgungsvorrichtung erlaubt jedoch auch die Verwendung von Öl, welches für den Wärmetransport hervorragend geeignet ist.

Um Wärmeverluste zu vermeiden, ist die Rohrleitung vorzugsweise mit einer Isolationsschicht versehen, die vorzugsweise nur an den Stellen unterbrochen ist, an denen die Rohrleitung thermisch und mechanisch mit dem Energiepanel gekoppelt ist. Auf diese Weise ist gewährleistet, dass die gewonnene Wärmeenergie auf dem Transportweg nicht verloren geht.

Die Verwendung einer externen Rohrleitung ist auch deshalb besonders vorteilhaft, weil diese mit einem achsparallel verlaufenden Kabelkanal versehen werden kann, der vorzugsweise in Form einer z.B. Schwalbenschwanz-förmigen Ausnehmung oder Nut in den Körper der Rohrleitung eingearbeitet wird. In diesem gut geschützten und trotzdem leicht zugänglichen Kabelkanal, der dem Energiepanel zugewandt ist, werden die Stromversorgungsleitungen, mit denen die von den Energiemodulen abgegebene elektrische Energie transferiert wird, und gegebenenfalls Datenleitungen, insbesondere Steuerleitungen angeordnet, die der Datenübertragung zwischen einer zentralen Steuereinheit und dezentralen bzw. lokal in den Energiepanels vorgesehenen Steuereinheiten dienen. Die lokalen Steuereinheiten können auch einfache Schalteinheiten sein, die von der zentralen Steuereinheit angesteuert werden um den von den Energiemodulen erzeugten Strom zu einem zentralen oder einem im Energiepanel vorgesehenen lokalen Stromabnehmer bzw. Verbraucher oder Speicher zu leiten.

Die lokale Steuereinheit ist vorzugsweise derart ausgestaltet oder, z.B. anhand eines Schalters derart schaltbar, dass das Energiemodul nach der Entkopplung des Energiepanels von der Stromleitung jeweils mit den Leuchtdioden verbunden ist, welche die erzeugte Energie konsumieren und gleichzeitig den Zustand des Energiepanels anzeigen. Die Energiepanel können daher isoliert, gesteuert durch die lokale Steuereinheit, oder im Verbund, gesteuert durch die zentrale Steuereinheit, derart betrieben werden, dass die Energie nicht der Stromleitung, sondern den auf dem Energiepanel vorgesehenen Verbrauchern zugeführt wird. Dadurch kann das Personal Wartungsarbeiten ohne Sicherheitsrisiken ausführen und installierte oder deinstallierte Energiepanel optisch prüfen.

Die genannten Leitungen können in Form eines Flachbandkabels vorliegen, das vorzugsweise in den erforderlichen Abständen mit elektrischen Verbindern versehen ist, von denen jeder mittels eines weiteren Verbinders mit der Anschlussleitung eines Energiepanels verbindbar ist.

Durch die Verwendung einer zentralen Steuereinheit sowie lokalen Steuereinheiten, die vorzugsweise mit lokal auf den Energiepanels angeordneten Stromspeichern, Leuchtdioden, und/oder Sensoren verbunden sind, ergeben sich im Zusammenhang mit dem erfindungsgemässen Energieversorgungssystem zahlreiche weitere vorteilhafte Anwendungsmöglichkeiten. Anhand von Sensoren kann der Status des Energiepanels sowie der Status der Umgebung festgestellt werden. Nach Übertragung der ermittelten Daten zur zentralen Steuereinheit kann diese das gesamte System beziehungsweise die Energieversorgungsvorrichtung optimal steuern. Beispielsweise können einzelne Segmente des Rohrleitungssystems zu- oder abgeschaltet werden.

Besonders vorteilhaft ist die Verwendung wenigstens eines Stromspeichers in jedem Energiepanel. Anhand heute bekannter Akkumulatoren kann die gewonnene Energie lokal gespeichert und erst bei Bedarf und unter optimalen Bedingungen abgegeben werden. Eine zentrale Stromspeichereinheit kann gegebenenfalls eingespart werden. Anhand heute bekannter Akkumulatoren, beispielsweise Lithium-Ionen Akkumulatoren, die typischerweise Energiedichten von 100 Wh/kg und Leistungsdichten von 1'000 W/k aufweisen, können somit enorme Energiemengen lokal gespeichert und bei Bedarf abgegeben werden. Anhand der lokalen Steuereinheiten können diese Akkumulatoren überwacht und in einem optimalen Arbeitsbereich gehalten werden, um beispielsweise eine vollständige Entladung derselben zu verhindern. Die gespeicherte elektrische Energie kann ferner in einer bevorzugten Form, gegebenenfalls auf höhere Werte transformiert und abgegeben werden, um Verluste zu reduzieren.

Unter Berücksichtigung der von der zentralen Steuereinheit zugeführten Steuerbefehle kann die lokale Steuereinheit den Energietransfer optimieren und gegebenenfalls bei einem Abruf von Energie die Energielieferung verweigern, wenn dies die Sachlage erfordert. Die lokale Steuereinheit kann daher den von den Energiemodulen abgegebenen Strom hin zu der im Energiepanel vorgesehenen lokalen Stromspeichereinheit oder hin zu wenigstens einem zentralen Stromabnehmer steuern. Der zentrale Stromabnehmer kann ein Akkumulator oder ein Energiewandler sein, der Wechselstrom an ein internes oder externes Netz abgibt.

Die mechanische und thermische Ankopplung an die Rohrleitung erfolgt mit einer Kopplungsvorrichtung, deren Elemente ganz oder teilweise einstückig an der Rohrleitung und/oder einstückig an einem Metallkörper des Energiepanels angeformt oder auch als separate Garnituren zur Verfügung gestellt werden können.

Vorzugsweise wird eine Rohrleitung mit zumindest annähernd und/oder teilweise kreisförmigem Querschnitt verwendet, so dass montierte Flanschen oder Schellen, die flächig an der Rohrleitung anliegen, in eine passende Lage gedreht und mit hohem Anpressdruck kraftschlüssig mit der Rohrleitung verbunden werden können. Besonders vorteilhaft können auch Kopplungselemente verwendet werden, die einer formschlüssigen Kopplung dienen. Beispielsweise können ineinander eingreifende Verzahnungen vorgesehen werden, die in wählbaren Positionen fixierbar sind.

Sofern eine separate Kopplungsgarnitur verwendet wird, kann diese optimal, insbesondere mit grösstmöglichen Kontaktflächen, einerseits an die Rohrleitung und andererseits an das Energiepanel angepasst werden. Gleichzeitig ist es leicht möglich die separate Kopplungsgarnitur zu montieren und zu justieren. Vorzugsweise werden Öffnungen im Energiepanel vorgesehenen, durch die hindurch Werkzeuge führbar sind, mittels derer die Kopplungsvorrichtung fest gezogen oder gelöst werden kann.

In vorzugsweisen Ausgestaltungen wird ein Metallsubstrat eines Energiemoduls direkt oder mittels eines starren oder flexiblen Metallbandes mit der Rohrleitung verbunden. Durch die Verbindung der Metallsubstrate der Energiemodule mit dem vorzugsweise geerdeten Rohrsystem resultiert zusätzlich ein optimaler Schutz gegen die Einwirkung von Strahlung sowie Blitzschlag.

Energiepanel für die erfindungsgemässe Energieversorgungsvorrichtung, die mit einem oder mehreren Energiemodulen versehen sind, können besonders einfach hergestellt und montiert werden. Die Energiepanels können optimal für die Aufnahme der Energiemodule sowie die Ankopplung an die Rohrleitung vorbereitet werden, wobei durch grosse Kontaktflächen oder die einstückige Anformung der Kopplungselemente an den Metallkörper des Energiepanels ein optimaler Wärmetransfer gewährleistet wird.

Die für die Energieversorgungsvorrichtung vorgesehenen Energiepanels liegen in der Ausgestaltung eines Dachziegels vor. Anhand der Dachziegel-förmigen Energiepanels kann der Dachstuhl eines Hauses daher ästhetisch in konventioneller Weise ausgestaltet werden. Auf die Vorzüge eines Hauses mit Dachziegeln, die aus beliebigen Materialien hergestellt werden können, muss daher nicht verzichtet werden. Zusätzlich resultiert aber der Vorteil, dass die Dachziegel die einwirkende Energie in Form von elektrischer und thermischer Energie an einen Verbraucher abgeben.

Ein in der Form eines Dachziegels vorliegendes Energiepanel weist daher eine Ziegelstruktur aus Ton oder Metall auf, an deren Oberseite ein Aufnahmebereich für das separat aufgesetzte Energiemodul vorgesehen ist. Jedoch Ziegelstruktur z.B. aus Ton und das dazu passende Energiemodul können daher separat in optimierten Fertigungsprozessen hergestellt werden.

Die Ziegelstruktur bzw. ein Dachziegel kann daher in einer Ziegelfabrik mit geringen Kosten hergestellt werden. Der Dachziegel ist dabei vorzugsweise derart ausgestaltet, dass er mit oder ohne Energiepanel montiert werden kann. Die Ziegelfabrik kann daher ein einziges Produkt fertigen und an Kunden liefern, die eine erfindungsgemässe Energieversorgungsvorrichtung installieren wollen oder auch nicht. Durch den gefertigten Dachziegel werden daher alle Anforderungen konventioneller Dachziegel erfüllt. Es sind lediglich Gestaltungsmerkmale vorhanden, welche es erlauben, das Energiemodul mit dem neuen Dachziegel zu koppeln.

Das Energiemodul kann ebenfalls in einer spezialisierten Fabrik mit optimaler Effizienz hergestellt werden. Vorzugsweise besteht das Energiemodul aus einem am hinab verschiedenen Schichten, deren Basisschicht ein Metallsubstrat bzw. ein plattenförmiger Metallkörper bildet, durch den die einwirkende Wärmeenergie anhand eines Kopplungselement durch eine Öffnung im Dachziegel oder über die durch ein weiteres Energiepanel abgedeckte Oberkante hin zur Rohrleitung abgeführt wird. Beispielsweise weist das Metallsubstrat ein einstückig daran angeformtes Kopplungselement auf, welches mit der Rohrleitung verbunden wird. Alternativ kann das Metallsubstrat über ein Metallband und Montagewinkel, wie Briden oder Klemmen mit der Rohrleitung verbunden werden.

Vorzugsweise ist der Metallkörper des Energiepanels mit einem Kühlelement und einer Kopplungsvorrichtung verbindbar oder einstückig verbunden, die mit der Rohrleitung derart verbindbar ist, dass die vom Kühlelement aufgenommene Wärmeenergie an die Rohrleitung transferierbar und das Energiepanel gleichzeitig stabil gehalten ist. Das Kühlelement ist mit dem Energiemodul vorzugsweise thermisch und gegebenenfalls auch mechanisch eng gekoppelt, so dass dieses optimal gekühlt wird. Vorzugsweise liegt das Energiemodul über grosse Kontaktflächen am Kühlelement an und ist mit diesem verschraubt, so dass der Wärmeübergangswiderstand zwischen den Kontaktflächen vernachlässigbar klein ist. In weiteren vorzugsweisen Ausgestaltungen liegt der Metallkörper flächig an der Ziegelstruktur an, so dass ein grosser Anteil der Wärmeenergie über den erwärmten Dachziegel an die daran anliegende Rohrleitung übertragen werden kann.

In einer ersten prinzipiellen Ausgestaltung weist das Energiepanel eine Struktur mit wenigstens einer Öffnung auf, innerhalb der der Metallkörper von einer Gussmasse gehalten ist. Beispielsweise wird ein Tonziegel gefertigt, der wenigstens eine Öffnung aufweist, die der Aufnahme des Energiemoduls und des Metallkörpers dient. In einer vorzugsweisen Ausgestaltung können der Metallkörper und das wenigstens eine Energiemodul auch als kombiniertes Modul vorgefertigt und in den Tonziegel eingesetzt werden.

In einer zweiten prinzipiellen Ausgestaltung weist das Energiepanel eine metallene Struktur auf, mit der der Metallkörper einstückig verbunden ist. Beispielsweise wird eine Metallstruktur aus Aluminium gefertigt, in die das wenigstens eine Energiemodul einsetzbar ist. Ferner kann die Metallstruktur mit einer grossen Kopplungsfläche für die Kopplungsvorrichtung oder auch mit einem einstückig angeformten Kopplungselement versehen sein. In beiden Fällen können die Kopplungselemente optimal und mit geringem Aufwand gefertigt werden.

Die in Form eines Ziegels vorliegende Struktur weist beispielsweise eine Öffnung auf, innerhalb der wenigstens ein Energiemodul mittels der Gussmasse oder Befestigungselementen gehalten ist, beispielsweise Schrauben, anhand derer das Energiemodul mit den Kopplungselement verbunden ist.

In besonders bevorzugten Ausgestaltungen weist der Dachziegel hingegen keine Öffnung auf, so dass die elektrischen Leitungen und die thermischen Kopplungselemente über den Dachziegel hinweg zur Rohrleitung geführt werden. Dies erlaubt eine besonders einfache Installation der Energiepanels, sowie einen modularen Aufbau des Energiepanels mit einem Dachziegel vorzugsweise aus Ton und einem dazu passenden, jedoch separat gefertigten Energiemodul.

In dieser vorzugsweisen Ausgestaltung sind an der Ziegelstruktur Halteelemente, beispielsweise Führungsnuten vorgesehen, in die das Energiemodul einschiebbar ist, welches nach dem Einschub vorzugsweise über Anschlusskontakte mit Anschlussleitungen verbunden ist. Vorzugsweise sind die Anschlussleitungen jedoch bereits am Energiemodul vorgesehen, so dass ein optimaler elektrischer Kontakt gewährleistet ist. Durch modularen Zusammenbau ergeben sich minimale Herstellungskosten und ein minimaler Montageaufwand. Für den Fall eines technischen Defekts kann das defekte Energiemodul innerhalb weniger Sekunden entnommen und durch eine neue Einheit ersetzt werden. Vorzugsweise weist die Struktur eine Öffnung auf, die nach Entnahme der Energiemodule oder mittels einer Klappe offen gelegt werden kann und die Zugriff auf Kopplungselemente bietet, die es erlauben das Energiepanel zu montieren oder zu lösen.

Sofern das Energiepanel mit einer lokalen Steuereinheit und/oder einer lokalen Speichereinheit ausgerüstet werden soll, kann dieses mit einer für die Aufnahme dieser Elemente geeigneten Kammer versehen sein. Die Kammer ist durch eine Klappe oder, besonders vorteilhaft, durch das in die Halteelemente einschiebbare Energiemodul abschliessbar.

Der modulare Aufbau des Energiepanels mit einem separat gefertigten Energiemodul erlaubt hingegen die vorteilhafte Integration von beliebigen elektrischen Bauteilen, wie Solarzellen, Steuereinheiten mit Schalttransistoren und Leuchtdioden. Das Energiemodul wird vorzugsweise in SMD (Surface Mounted Design)-Technik gefertigt. Vorzugsweise werden die elektrischen Bauteile auf einem isolierten Metallsubstrat (IMS ®) montiert, welches eine optimale Wärmeableitung an das Metallsubstrat gewährleistet. Besonders vorteilhaft ist die Integration von Leuchtdioden, die nach der Installation der Energiepanels frei liegen und offen sichtbar sind. Beispielsweise werden zwei parallel geschaltete Ketten mit mehreren in Serie geschalteten Leuchtdioden vorgesehen, die über die lokale Steuereinheit, in einfachen Ausgestaltungen ein Opto-Koppler oder Schalttransistor, wahlweise mit den Solarzellen verbindbar sind, um diese zu prüfen oder die erzeugte Energie zu absorbieren. Sofern die Energiepanels noch nicht installiert sind oder die Stromleitung spannungsfrei sein soll, werden die Solarzellen vorzugsweise mit diesen Leuchtdioden verbunden. Sofern eine Kette mit Leuchtdioden ausbauen sollte, wird deren Funktion von der anderen Kette übernommen.

Nachfolgend wird die Erfindung anhand von Zeichnungen näher erläutert. Dabei zeigt:
- Fig. 1: eine erfindungsgemässes Energieversorgungssystem mit einem Energiepanel 1, in dem ein Metallkörper 2 vorgesehen ist, hat der thermisch und mechanisch mit einer Rohrleitung 4 gekoppelt ist;
- Fig. 2: in dreidimensionaler Darstellung, den Metallkörper 4 des Energiepanels 1 von Figur 1, der ein der Absorption von Wärmeenergie dienendes Kühlelement 21, ein mit der Rohrleitung verbindbares Kopplungselement 22 sowie eine Kammer 23 aufweist, die der Aufnahme einer Steuereinheit 3 und eines Stromspeichers 38 dient;
- Fig. 3: der Metallkörper 2 von Figur 2 in einer weiteren Ausgestaltung, in der die Struktur 5 des Energiepanels 1 gegebenenfalls einstückig aus Metall gefertigt ist;
- Fig. 4: der Metallkörper 2 von Figur 2 in einer weiteren Ausgestaltung, der mittels einer Kopplungsgarnitur 271, 272, 273 mit der Rohrleitung 4 verbunden ist, die im wesentlichen einen kreisrunden Querschnitt aufweist;
- Fig. 5: in dreidimensionaler Darstellung ein Segment der Rohrleitung 4 von Figur 1, die zwei der Führung des Wärmetransportmediums dienende Flüssigkeitskanäle 41, 42 sowie eine axial verlaufende Schwalbenschwanz-förmige Ausnehmung 47 aufweist, in der z.B. in Form eines Flachbandkabels vorliegende Stromleitungen 33 und Steuerleitungen 34 eingefügt werden;
- Fig. 6: Elemente des Rohrleitungssystems mit Segmenten von Rohrleitungen 4 gemäss Figur 1, die anhand von Montageprofilen 81 mechanisch miteinander verbindbar sind und deren Flüssigkeitskanäle 41,42 anhand von Verbindungsteilen 83, 84, 85 zusammenschliessbar oder mit Zufluss- und Abschlussleitungen verbindbar sind;
- Fig. 7: eine vorzugsweise ausgestaltete Rohrleitung 4 mit einem Profil mit zwei über eine Basisstruktur 400 miteinander verbundenen Rohrteilen 410, 420, in denen der erste bzw. zweite Flüssigkeitskanal 41, 42 geführt sind, wobei auf dem ersten Rohrteil 410 ein den Kabelkanal 47 führendes erstes Profilteil 470 und auf dem zweiten Rohrteil 420 eine Trägerplatte 480 angeordnet ist, an dessen Oberseite die Energiepanel 1 flächig anliegen können;
- Fig. 8: zwei je mit einer Rohrleitung 4 verbundene Energiepanel 1 in einer ersten Ausgestaltung;
- Fig. 9: ein mit einer Rohrleitung 4 verbundenes Energiepanel 1 in einer zweiten Ausgestaltung;
- Fig. 10: mehrere an Rohrleitungen 4 auf einem Dach montierte Energiepanel 1 gemäss Figur 5;
- Fig. 11: ein Energiepanel 1 gemäss Figur 5, in das ein Energiemodul 300 einschiebbar ist;
- Fig. 12: die Struktur 5 eines Dachziegels, auf den ein Energiemodul 300 aufsetzbar ist;
- Fig. 13: die Struktur 5 des Dachziegels von Figur 12, während der Montage des Energiemoduls 300;
- Fig. 14: das durch den Dachziegel 5 und das damit verbundene Energiemodul 300 gebildete Energiepanel 1;
- Fig. 15: das Energiemodul 300 von Figur 13 in Explosionsdarstellung;
- Fig. 16: zwei Energiemodule 300, die mittels Anschlussleitungen 32 elektrisch mit einer Stromversorgungsleitung 33 und Steuerleitungen 34 und mittels Kopplungsvorrichtungen 22 elektrisch und thermisch mit der Rohrleitung 4 verbunden werden;
- Fig. 17: eine vorzugsweise Ausgestaltung der Rohrleitung 4 von Figur 7 mit zwei Kabelkanälen 47, die der separaten Führung von Stromleitungen 33 und Steuerleitungen 34 dienen;
- Fig. 18: auf einem Dach montierte Rohrleitungen 4, welche die Dachlattung bilden, auf der Energiepanel 1 angeordnet sind;
- Fig. 19: der Dachstock 70 eines Gebäudes, auf dem erfindungsgemässe Energiepanel 1 installiert werden;
- Fig. 20: ein Blockschaltbild der erfindungsgemässen Energieversorgungsvorrichtung mit Energiepanels 1 gemäss Figur 1, 8, 9, 11 oder 14;

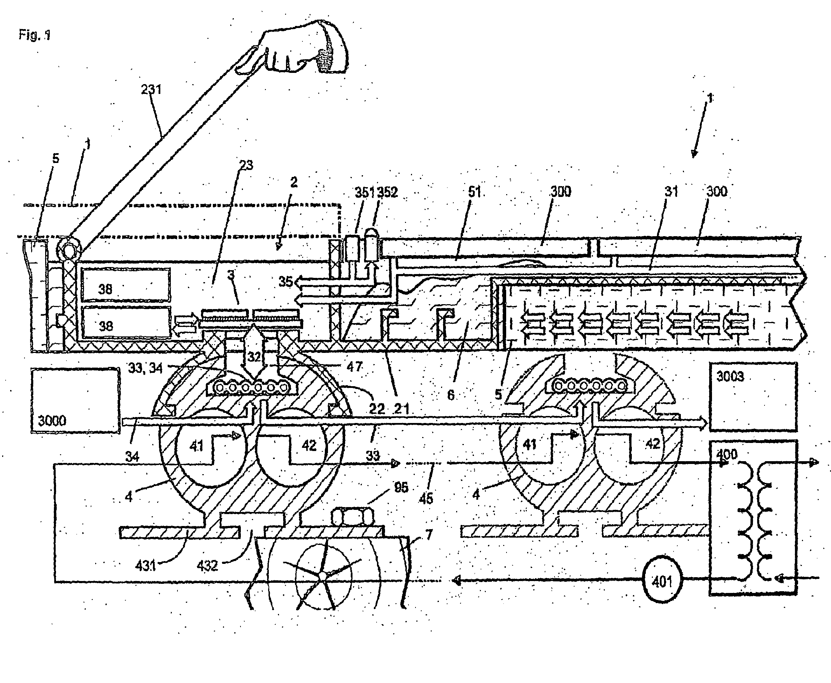

Figur 1 zeigt ein erfindungsgemässes Energieversorgungssystem mit einem Energiepanel 1, das thermisch und mechanisch mit einer Rohrleitung 4 eines Rohrleitungssystems verbunden ist, in dem ein Wärmetransportmedium 45 zirkuliert.

Das Energiepanel 1 weist eine beispielsweise aus Ton oder Metall bestehende Struktur 5 mit einer Öffnung 51 auf, in die mehrere vorzugsweise der Aufnahme von Sonnenenergie dienende Energiemodule 300 und ein Metallkörper 2 eingesetzt sind. Der Metallkörper 2 weist ein der Aufnahme von Wärmeenergie dienendes Kühlelement 21, eine der Ankopplung an die Rohrleitung 4 dienende Kopplungsvorrichtung 22 sowie eine mittels einer Klappe 231 abschliessbare Kammer 23 auf, in der eine Steuereinheit 3 und zwei Stromspeichereinheiten 38 vorgesehen sind. Die in der Kammer 23 vorgesehene Steuereinheit 3 ist über Leitungen 35 mit wenigstens einem Sensor 353 und wenigstens einem Signalgeber 352, z.B. einer Leuchtdiode, verbunden.

In dieser Ausgestaltung des Energiepanels 1 werden der Metallkörper 2, die Energiemodule 300 und gegebenenfalls auch die Sensoren 351 und Signalgeber 352 mittels einer vorzugsweise thermisch gut leitenden Gussmasse 6 innerhalb der Öffnung 51 der Struktur 5 an den entsprechenden Positionen fixiert.

Das erfindungsgemässe Energiepanel 1 dient der Abgabe elektrischer Energie und Wärmeenergie. Die von den Energiemodulen 300 abgegebenen elektrische Energie wird über Anschlussleitungen 31 der lokalen Steuereinheit 3 zugeführt, von der elektrische Energie an die lokalen Speichereinheiten 38 oder über eine Stromversorgungsleitung 33 an externe Verbraucher bzw. einen vorgeschalteten Energiewandler 3003 abgegeben wird.

Ferner ist eine zentrale Steuereinheit 3000 vorgesehen, die über einen Datenbus 34 mit den lokalen Steuereinheiten 3 kommuniziert. Nebst dem Energiemanagement, das von der zentralen Steuereinheit 3000 und den lokalen Steuereinheiten 3 gesteuert wird, kann vor Inbetriebnahme der Energiepanel 1 auch eine Authentisierungsprozedur durchgeführt werden, mit der festgestellt wird, ob die zentrale Steuereinheit 3000 autorisiert ist, die installierten Energiepanel 1 zu betreiben. Beispielsweise werden zwischen den Steuereinheiten 3, 3000 Kennworte ausgetauscht und geprüft, ob diese zueinander korrespondieren. Entwendete Energiepanel 1 können daher an anderen Installationsorten nicht mehr verwendet werden und sind für den Anwender wertlos. Das Entwenden derart geschützter Energiepanel 1 ist daher nicht lohnend.

Die Stromversorgungsleitungen 33 und die Steuerleitungen 34 können vorteilhaft als Flachbandkabel realisiert werden, das besonders vorteilhaft in der in der Rohrleitung 4 vorgesehenen, achsparallel verlaufenden Ausnehmung 47 geführt werden kann. Das Flachbandkabel 33, 34 kann mit Verbindern versehen sein, an die ein Anschlusskabel 32 abschliessbar ist, das durch eine Öffnung 234 in der Kammer 23 geführt und mit der lokalen Steuereinheit 3 verbunden ist. Besonders vorteilhaft sind Flachbandkabel und Verbindungsvorrichtungen verwendbar, wie sie in [3], FLACHKABELSYSTEM TECHNOFIL, Produkteschrift der Woertz AG, Muttenz vom Mai 2004 gezeigt und beschrieben sind. Die darin offenbarten Anschlussdosen können auf das Flachbandkabel 33, 34 aufgesetzt und mittels Spitzeschrauben mit den Adern des im Kabelkanal 47 liegenden Flachbandkabels 33, 34 verbunden werden. Vorzugsweise wird eine an die Rohrleitung angepasste Dose verwendet.

Von der lokalen Steuereinheit 3 kann der Stromtransfer von und zu den lokalen Speichereinheiten 38 und von und zu den externen Verbrauchern beliebig gesteuert werden. Sofern Lithium-Ionen-Akkumulatoren als Speichereinheiten 38 verwendet werden, so ist die lokale Steuereinheit 3 dafür besorgt, dass diese stets in einem günstigen Arbeitsbereichs betrieben werden. Die gewonnene elektrische Energie kann daher lokal gespeichert und durch die zentrale Steuereinheit 3000 nach Bedarf abgerufen werden, wobei der optimale Betrieb der Akkumulatoren sichergestellt ist.

Es ist zu beachten, dass bei der erfindungsgemässen Energieversorgungsvorrichtung der Transfer elektrischer und/oder thermischer Energie anhand der zentralen und lokalen Steuereinheiten 3, 3000 in beide Richtungen erfolgen kann. Beispielsweise können die lokal vorgesehenen Stromspeichereinheiten 38 mittels elektrischer Energie geladen werden, die aus dem öffentlichen Stromnetz entnommen wird. Die Anlage kann daher installiert und hochgefahren werden, auch wenn keine genügende Sonneneinstrahlung vorhanden ist. Durch den Transfer thermischer Energie zu denen Energiepanel 1 können diese in einen idealen Betriebs Zustand versetzt, beispielsweise von einer Schneeschicht befreit werden.

Die vom Energiepanel 1 bzw. die von der Struktur 5 des Energiepanels 1 und von den Energiemodulen 300 aufgenommene Wärmeenergie wird von dem als lokale Wärmesenke dienenden Metallkörper 2, insbesondere von dessen Kühlelement 21, aufgenommen, das zu diesem Zweck flächig entlang den Energiemodulen 300 und der Oberfläche der Struktur 5 gezogen ist. In vorzugsweisen Ausgestaltungen werden die Energiemodule 300 mit dem Kühlelement 21 verschraubt, so dass der Metallkörper 2 und die Energiemodule 300 eine Einheit bilden, die als Modul in die Öffnung 51 der Struktur 5 eingesetzt und darin befestigt, gegebenenfalls verschraubt, vorzugsweise vergossen werden kann.

Vom Kühlelement 21 des Metallkörpers 2 wird die gewonnene Wärmeenergie über die Kopplungsvorrichtung 22 an die Rohrleitung 4 abgegeben, die zwei Flüssigkeitskanäle 41,42 aufweist, in denen ein Wärmetransportmedium 45 innerhalb der Rohrleitung 4 vor und zurück fliesst und die zugeführte Wärmeenergie zu einem Wärmetauscher 400 führt und von dort mittels einer Umwälzpumpe 401 in den Kreislauf zurückgeführt wird.

Die Rohrleitung 4 weist Montageelemente in Form von Flanschen 431, die mit Elementen eines Dachstuhls oder einer Gebäudewand verbindbar sind. In Figur 1 ist gezeigt, dass ein Flansch 431 der Rohrleitung 4 mittels einer Schraube 95 mit einer Holzsparre 7 verschraubt ist. Zahlreiche andere Montagemöglichkeiten fallen ebenfalls in Betracht und erlauben es gegebenenfalls, auf die Montageelemente 431 zu verzichten. Beispielsweise kann eine Rohrleitung 4 mit einem kreisförmigen Querschnitt verwendet werden, die mittels einer Klammer oder eines Bügels gehalten wird.

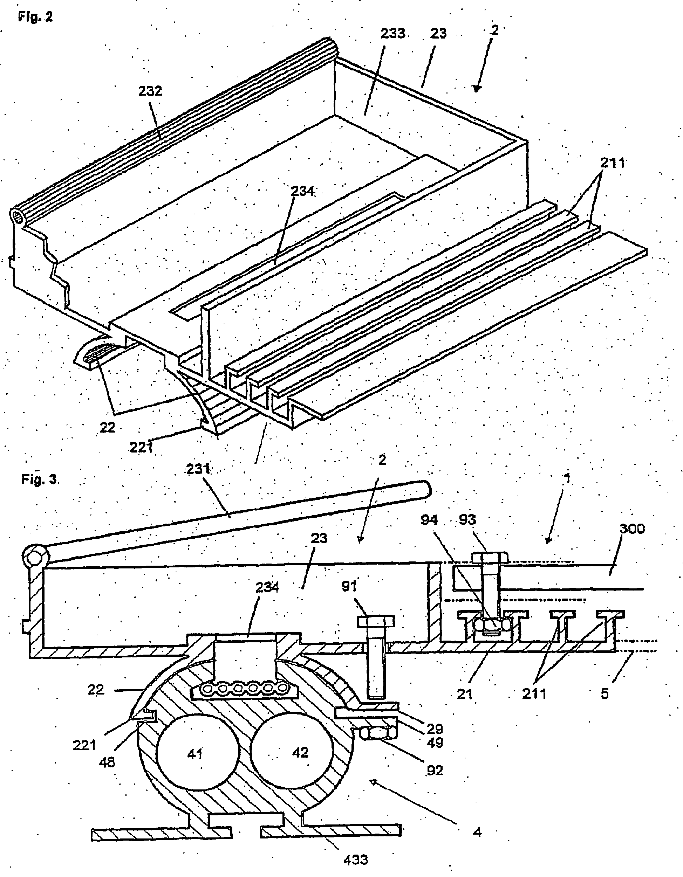

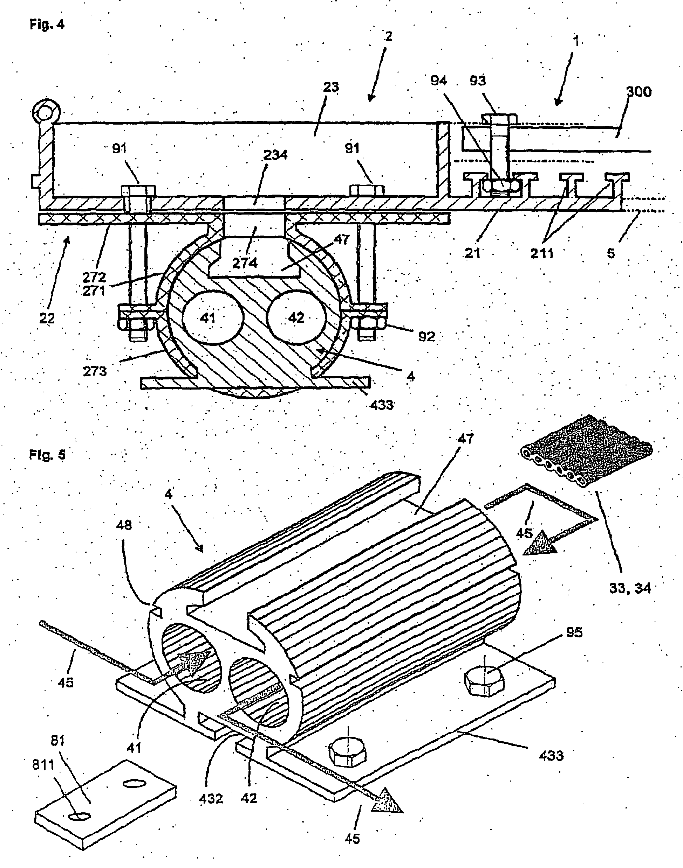

Figur 2 zeigt in dreidimensionaler Darstellung, den Metallkörper 2 des Energiepanels 1 von Figur 1, der das der Absorption von Wärmeenergie dienende Kühlelement 21, das mit der Rohrleitung verbindbare Kopplungselement 22 sowie die Kammer 23 aufweist, deren Innenraum 233 der Aufnahme der Steuereinheit 3 und des Stromspeichers 38 dient. Gut ersichtlich ist die in der Kammer 23 vorgesehene Öffnung 234, durch die das Anschlusskabel 32 hindurch zur Rohrleitung 4 führbar ist. Das Kühlelement 21 ist mit Kühlrippen 211 versehen, welche der Aufnahme von Wärmeenergie und der Verankerung in der Gussmasse 6 dienen. Das bogenförmige Kopplungselement 22 weist an dessen Enden Halterippen 221 auf, die in entsprechende, in der Rohrleitung 4 vorgesehene Haltenuten 48 eingreifen können. Das Kopplungselement 22 kann daher auf die Rohrleitung 4 gepresst werden, bis die Halterippen 221 in den Haltenuten 48 einrasten (siehe Figur 1). Zum Lösen des Kopplungselements 22 müssen die Halterippen 221 aus den Haltenuten 48 gezogen werden. Alternative Ausgestaltungen sind in den Figuren 3 und 4 gezeigt.

Figur 3 zeigt den Metallkörper 2 von Figur 2 in einer weiteren Ausgestaltung, in der die Struktur 5 des Energiepanels 1 gegebenenfalls einstückig aus Metall, vorzugsweise Aluminium, gefertigt und gegebenenfalls beschichtet ist. Es ist gezeigt, dass das Energiemodul 300 mittels einer Schraube 93 und einer Schraubemutter 94 montiert ist, die zwischen zwei Kühlrippen 211 verschiebbar gehalten ist. Ferner ist gezeigt, dass das bogenförmige Kopplungselement 22 nur an einer Seite mit einer Halterippe 221 in einer Haltenut 48 der Rohrleitung 4 gehalten ist. Auf der anderen Seite sind das Kopplungselement 22 und die Rohrleitung 4 mit Flanschelementen 29, 49 versehen, die mittels einer Schraubemutter 92 und einer Schraube 91 fest gezogen werden können, deren Schraubenkopf innerhalb der Kammer 23 gehalten ist und daher leicht betätigt werden kann. Auf diese Weise gelingt es, das Kopplungselement 22 fest gegen die Rohrleitung 4 zu pressen, um einen minimalen thermischen Übergangswiderstand zu erzielen.

Während die in den Figuren 1, 2 und 3 gezeigten Rohrleitungen 4 mit Kopplungselementen versehen sind, zeigt Figur 4 eine stark vereinfachte Rohrleitung 4 mit einem praktisch kreisrunden Querschnitt. Die daran befestigten Schellen oder Briden 271, 273, von denen eine mit einer Kopplungsplatte 272 versehen ist, können daher beliebig gedreht und in einer beliebigen Position anhand von Schraubenmuttern 92 und Schrauben91 fixiert werden, deren Schraubenköpfe 91 wiederum in der Kammer 23 gehalten sind. Das Kopplungselement 22 besteht in diesem Fall aus der mehrteiligen Kopplungsgarnitur 271, 272, 273. die Kopplung mit dem Metallkörper 2 erfolgt mittels der Kopplungsplatte 272, die an den Metallkörper 2 angedrückt wird.

Die in den Figuren 3 und 4 gezeigten Ausgestaltungen des Energiepanels 1 zeigen, dass dieses besonders vorteilhaft einstückig aus Metall, insbesondere Aluminium, gefertigt werden kann. Die Befestigung der Energiemodule ist einfach möglich. Aufgrund des Fehlens interner Kühlmittelkanäle, kann das metallene Energiepanel 1 äusserst kompakt aufgebaut werden. In den einfachsten Ausgestaltungen des Energiepanels 1 sind die Struktur 5 bzw. der Metallkörper 2 identisch.

Figur 5 zeigt in dreidimensionaler Darstellung ein Segment der Rohrleitung 4 von Figur 1 mit den zwei der Führung des Wärmetransportmediums dienenden Kanälen 41, 42 sowie der axial verlaufenden Schwalbenschwanz-förmigen Ausnehmung 47, innerhalb der das Flachbandkabel 33, 34 geführt ist. Schematisch ist ferner der Verlauf des Wärmetransportmediums 45 gezeigt, welches frontseitig in den Flüssigkeitskanal 41 eintritt und aus dem Flüssigkeitskanal 42 wieder austritt. Ferner ist ein Montageprofil 81 gezeigt, welches in Kopplungsnuten 432 von zwei benachbarten Rohrleitungen 4 einführbar und darin mittels Schrauben 812 arretierbar ist.

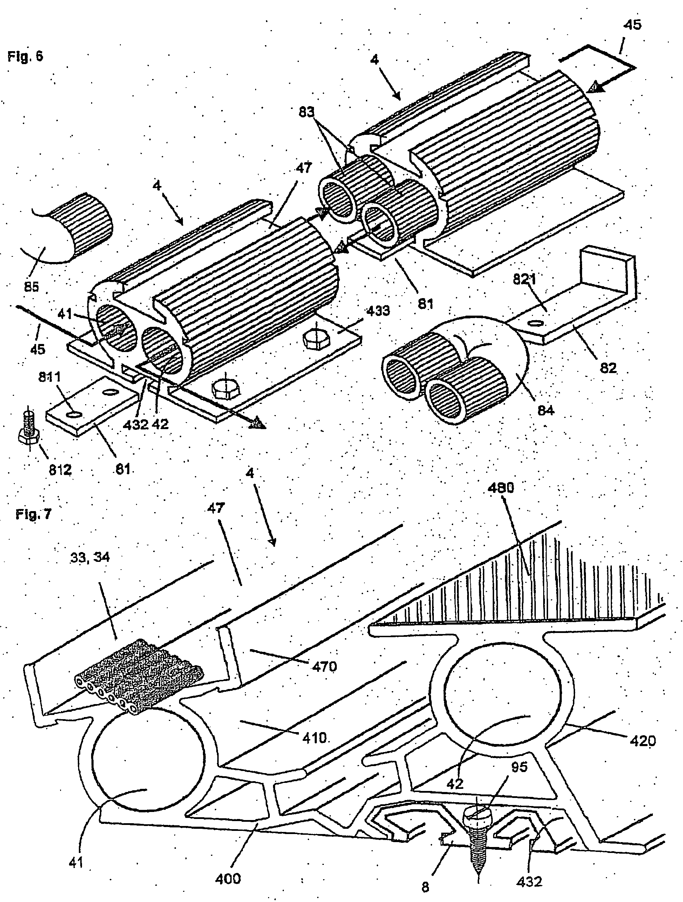

Figur 6 zeigt Elemente des Rohrleitungssystems mit Segmenten von Rohrleitungen 4 gemäss Figur 2, die anhand von Montageprofilen 81 mechanisch miteinander verbindbar sind und deren Flüssigkeitskanäle 41,42 anhand von Verbindungsteilen 83, 84, 85 oder mit Zufluss- und Abschlussleitungen verbindbar sind. Wie bereits unter Figur 2 ausgeführt, sind die Rohrleitungen 4 mit wenigstens einer Kopplungsnut 432 versehen, innerhalb der ein Montageprofil 81 seitlich verschiebbar gehalten und fixiert werden kann. Dazu weist die Kopplungsnut 432 vorzugsweise ein T- oder Schwalbenschwanzförmiges Profil auf. Zur Arretierung des Montageprofils 81 ist dieses mit einer Gewindebohrung 811 versehen, in die ein frontseitig vorzugsweise mit einer Ringschneide versehener Gewindestift oder eine Schraube 812 gegen die obere Nutfläche drehbar und derart anpressbar ist, dass dieser kraftschlüssig mit dem Körper der Rohrleitung verbunden ist bzw. die Ringschneide formschlüssig in diesen eingreift. Zur Verbindung der Flüssigkeitskanäle 41, 42 sind Verbindungsteile vorzugsweise aus Kunststoff 83, 84, 85 vorgesehen, die Rohrteile aufweisen, die dicht abschliessend in die Flüssigkeitskanäle 41, 42 eingeschoben werden können. Das erste Verbindungsteil 83, welches der Verbindung von zwei Rohrleitungen 4 dient, weist für jeden der wenigstens zwei Flüssigkeitskanäle 41, 42 ein Rohrteil oder zwei zueinander korrespondierende Rohrteile auf, die gegebenenfalls mittels einer Platte miteinander verbunden sind, welche vorzugsweise denselben Querschnitt aufweist, wie die Rohrleitung 4. Zur Verbindung der Flüssigkeitskanäle 41, 42 ist das zweite Verbindungsteil 84 vorgesehenen, welches zwei miteinander verbundene und achsparallel ausgerichtete Rohrteile aufweist. Nach dem Einschieben des zweiten Verbindungsteils 84 bilden die beiden Flüssigkeitskanäle 41, 42 der Rohrleitung 4 somit einen einzigen, durchgehenden Flüssigkeitskanal der an derselben Seite in die Rohrleitung eintritt und an dieser wieder austritt. An den Eintritts- und Austrittsstellen sind dritte Verbindungsteile 85 vorgesehen. Zum Halten der in die Rohrleitung 4 eingesetzten zweiten und/oder dritten Verbindungsteile 84, 85 dient ein mit einer Gewindebohrung 821 versehenes Winkelprofil 82, das in die Kopplungsnut 432 einführbar und mittels einer Schraube 821 fixierbar ist.

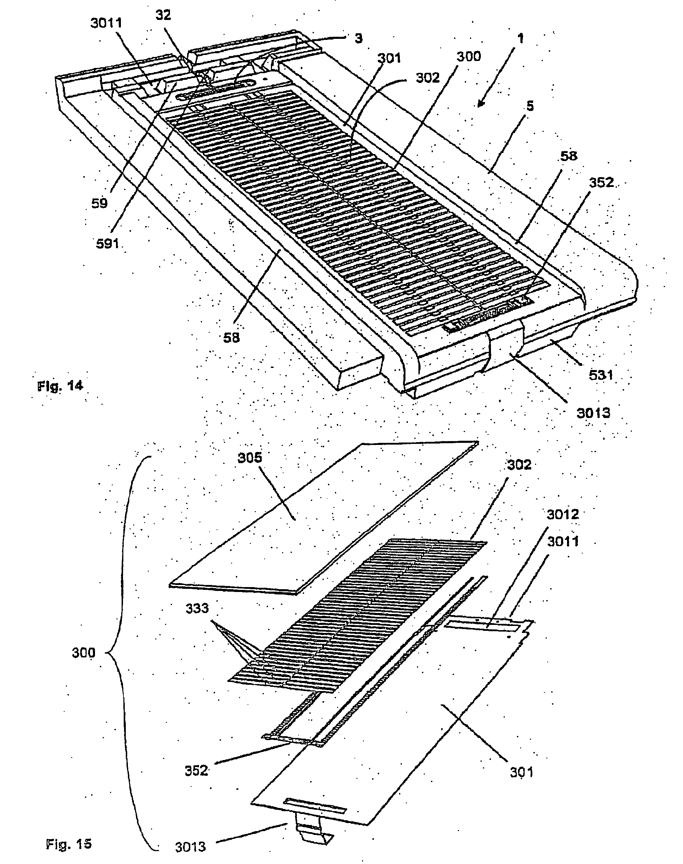

Figur 7 zeigt eine vorzugsweise ausgestaltete Rohrleitung 4 mit einem Profil mit zwei über eine Basisstruktur 400 miteinander verbundenen Rohrteilen 410, 420, in denen der erste bzw. zweite Flüssigkeitskanal 41, 42 geführt sind, wobei auf dem ersten Rohrteil 410 ein den Kabelkanal 47 führendes erstes Profilteil 470 und auf dem zweiten Rohrteil 420 eine Trägerplatte 480 angeordnet ist, an dessen Oberseite die Energiepanel 1 flächig anliegen können. In dieser Ausgestaltung dient die Rohrleitung 4 vor allem der Installation von Energiepanel von Figur 14. Die in der Form eines Dachziegels vorliegenden Energiepanels 1 liegen flächig an der Trägerplatte 480 an und übertragen dadurch thermische Energie vom Energiepanel 1 zur Rohrleitung 4. Eine zusätzliche direkte elektrische und thermische Verbindung zwischen dem Metallsubstrat 301 des Energiemoduls 300 und der Rohrleitung 4 erfolgt vorzugsweise durch ein Kopplungselement 22, beispielsweise ein Metallband, das in einem Kanal 591 der Ziegelstruktur 5 geführt wird. Während das zu installierende Energiemodul 300 auf der Trägerplatte 480 aufliegt und beispielsweise mittels einer an der Unterseite der Ziegelstruktur vorgesehene Nase 54 gehalten ist, liegt der Kabelführungskanal 47 noch immer frei, so dass die elektrische Verbindung des Energiepanels 1 mit der Stromleitung und der gegebenenfalls vorhandenen Steuerleitungen 33, 34 einfach vollzogen werden kann.

In Figur 7 ist ferner gezeigt, dass in der in der Basisstruktur 400 der Rohrleitung 4 vorgesehenen Kopplungsnut 432 ein Montageprofil 8 vorgesehen ist, durch das die Rohrleitung 4 gehalten ist oder benachbarte Rohrleitungen 4 gehalten sind. Das Montageprofil 8, beispielsweise ein extrudiertes Aluminiumprofil von wahlweiser Länge, ist durch Montageschrauben 95 mit dem Gebälk des Dachstuhls verbunden. Die Verwendung des Montageprofils 8 erlaubt die einfache und präzise Montage des Rohrleitungssystems. In einem ersten Schritt werden die Montageprofile 8 präzise ausgerichtet und montiert. Anschliessend werden die Rohrleitungen 4 in die Montageprofile 8 eingehängt.

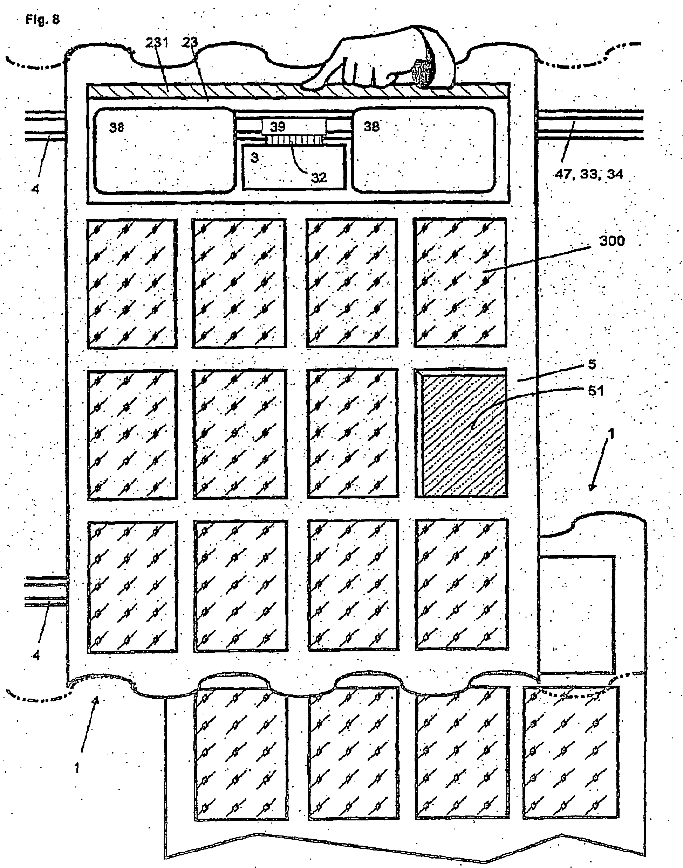

Figur 8 zeigt zwei je mit einer Rohrleitung 4 verbundene Energiepanel 1 in einer ersten Ausgestaltung. Beim oberen Energiepanel 1 ist die Klappe 231 der Kammer 23 geöffnet. In der Kammer 23 sind zwei Energiespeicher 38 und die lokale Steuereinheit 3 vorgesehenen, die über das Anschlusskabel 32 und einen Verbinder 39 mit dem in der Rohrleitung 4 geführten Flachbandkabel 33, 34 verbunden ist. Besonders einfach kann die elektrische Ankopplung an das Flachbandkabel 33, 34 erfolgen, wenn dieses aus der in der Rohrleitung 4 vorgesehenen Ausnehmung 47 herausgeführt und in die im Metallkörper 2 vorgesehene Kammer 2 hineingeführt wird. Die Ausnehmung 47 und die Öffnung 234 in der Kammer 23 sind in fachmännischer Weise anzupassen.

In Figur 8 ist weiter gezeigt, dass das obere Energiepanel 1 das untere Energiepanel 1 derart überlappt, dass die dortige Kammer 23 vollständig überdeckt ist. Von oben sind daher nur die Energiemodule 300 sichtbar, von denen eines entnommen wurde, um Einblick in die Öffnung 51 der Struktur 5 des Energiepanels 1 zu gewähren. Durch die Integration der Kammer 23 in das Energiepanel 1 resultiert somit kein Verlust an Oberfläche, die mit Energiemodulen abgedeckt werden kann.

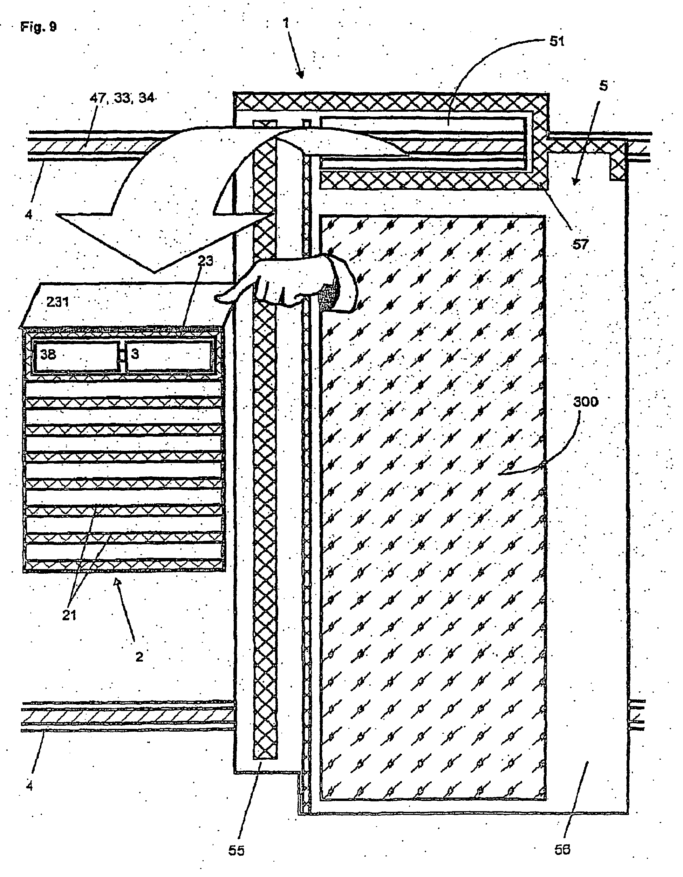

Figur 9 zeigt ein mit einer Rohrleitung 4 verbundenes Energiepanel 1 in einer zweiten Ausgestaltung. Es ist gezeigt, dass der Metallkörper 2 (siehe Figur 2) entnommen wurde, so dass die Öffnung 51 in der Struktur 5 des Energiepanels 1 frei liegt. Gezeigt ist, dass die Struktur seitlich Randabschlusselemente 55, 56 aufweist, die zu Randabschlusselementen 56 bzw. 55 benachbarter Energiepanel 1 korrespondieren. Im Bereich der Kammer 23 bzw. unterhalb der Öffnung 51 ist ferner ein Abschlussstück 57 vorgesehen, welches vom nächsthöheren Energiepanel 1 überdeckt wird und verhindert, dass von diesem eintreffendes Regenwasser in die Kammer 23 eindringen kann.

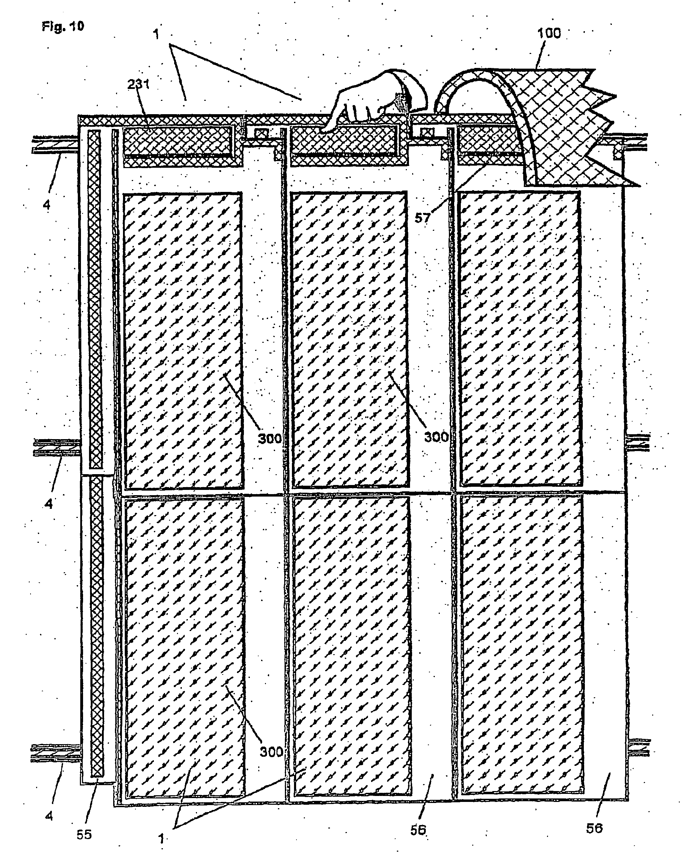

Figur 10 zeigt mehrere an Rohrleitungen 4 auf einem Dach montierte Energiepanel 1 gemäss Figur 9, deren Randabschlusselemente 55, 56 einander überdecken. Überdeckt sind auch die Abschlussstücke 57 der unteren Reihe der Energiepanel 1. Die Abschlussstücke 57 der oberen Reihe der Energiepanel 1 werden durch Firstabschlussziegel 100 überdeckt.

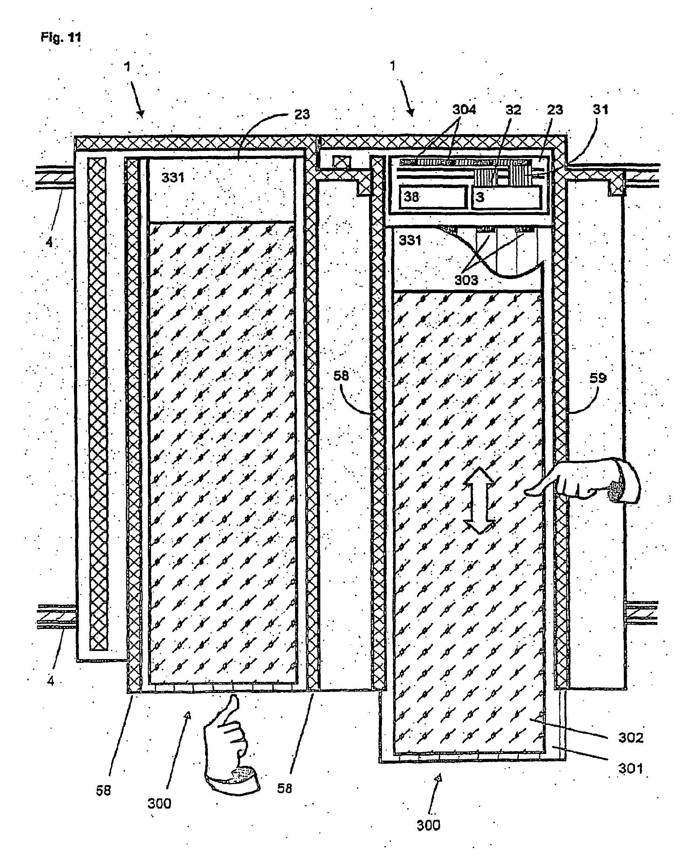

Eine weitere vorteilhafte Ausgestaltung der erfindungsgemässen Energiepanel 1 ist in Figur 11 gezeigt. Bei dieser Ausgestaltung ist das Energiemodul 300 in Halteelemente 58, beispielsweise Führungsnuten derart einführbar, dass dessen frontseitiges Endstück 321 nach dem vollständigen Einschieben des Energiemoduls 300 die Kammer 23 vollständig überdeckt und verschliesst. Das Energiemodul 300 bzw. dessen Endstück 331 dient daher gleichzeitig als Verschlussschieber für die Kammer 23.

Damit der elektrische Kontakt mit der lokalen Steuereinheit 3 nach dem Einschieben des Energiemoduls 300 automatisch erfolgt, sind am Energiemodul 300 und in der Kammer 23 Kontaktleisten 303, 304 vorgesehen, die in der Endstellung des Energiemoduls 300 aneinander anliegen.

Aufgrund des modularen Aufbaus des Energiepanels 1 von Figur 10 resultiert eine technisch und wirtschaftlich vorteilhafte Lösung. Der Zusammenbau und die Wartung der Energiepanel 1 und somit des gesamten Energieversorgungssystems sind mit minimalem Aufwand möglich. Sofern beispielsweise eines der Energiemodule 300 ausfällt, wird dies vom entsprechenden Signalgeber, beispielsweise einer Leuchtdiode 352 angezeigt. In der Folge kann der Handwerker das fehlerhafte Energiemodul 300 mit wenigen Handgriffen entfernen und durch ein neues ersetzen.

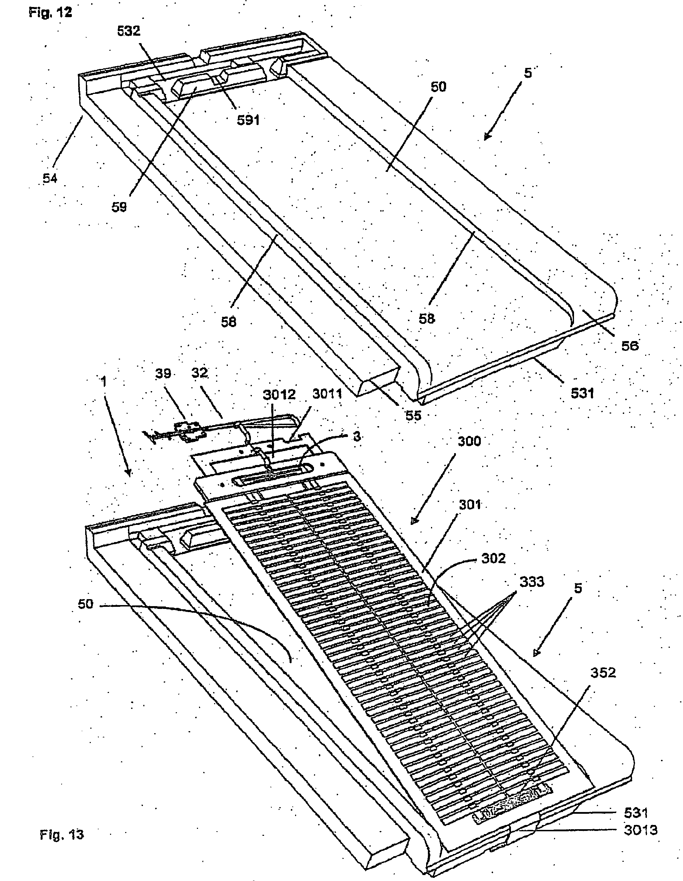

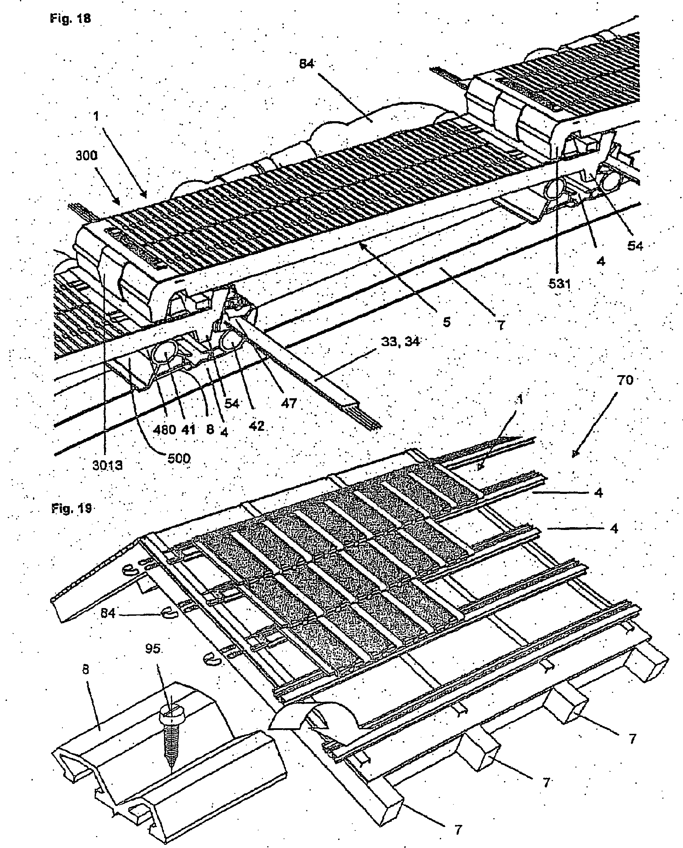

Figur 12 zeigt die Struktur 5 eines Dachziegels, auf die ein Energiemodul 300 aufsetzbar ist. Der Dachziegel weist Merkmale eines konventionellen Dachziegels auf, welches erlauben, ein Dach mit solchen Dachziegeln 5 und abzudecken. Gezeigt ist, dass die Struktur seitlich Randabschlusselemente 55, 56 aufweist, die zu Randabschlusselementen 56 bzw. 55 benachbarter Energiepanel 1 korrespondieren. Ferner ist gezeigt, dass an der Unterseite des unteren Endes des Dachziegels 5 eine Rippe 531 vorgesehen ist, die in eine Ausnehmung 532 an der Oberseite des oberen Endes des Dachziegels 5 eingreifen kann. An der Unterseite am oberen Ende des Dachziegels 5 ist ferner eine Nase 54 vorgesehen, die in die Dachlattung eingreifen kann. Beispielsweise übergreift die Nase 54 des Dachziegels 5 die Trägerplatte der Rohrleitung von Figur 7, wie dies in Figur 18 gezeigt ist. Der Dachziegel von Figur 12 kann daher als Ersatz für konventionelle Dachziegel eingesetzt werden.

Die Ziegelstruktur 5 weist zudem eine Ausnehmung 50 für ein Energiemodul 300 auf. Die Ausnehmung 50 ist seitlich durch zwei Führungsleisten 58 begrenzt und weist oben eine Halterippe 59 auf, die dem Halten des Metallkörpers 301 des Energiemoduls 300 dient. Ferner ist ein Kabelkanal 591 vorgesehen, durch den das Anschlusskabel 32 des Energiemoduls 300 und gegebenenfalls ein Kopplungselement 22 nach oben geführt werden kann.

Figur 13 zeigt den Dachziegel 5 von Figur 12, während der Montage des Energiemoduls 300, welches ein Metallsubstrat 301 aufweist, an dessen oberen Ende ein Metallrahmen 3011 mit einer Öffnung 3012 vorgesehen ist, in die die Halterippe 59 eingeführt wird. An der Unterseite weist das Metallsubstrat 301 eine nach unten gebogene Zunge auf, die das untere Ende des Dachziegels 5 und greifen kann. Auf dem Metallsubstrat 301 ist eine Schicht 302 mit elektrischen Bauteilen vorgesehen. Gezeigt sind die lokale Steuereinheit 3, in Serie geschalteten Solarzellen 333, sowie Leuchtdioden 352, anhand derer der Status des Energiepanels 1 abgelesen werden kann. Vorzugsweise sind die Leuchtdioden 532, am unteren Ende des Energiepanels 1 vorgesehen, welches nach der Installation frei liegt.

Figur 14 zeigt das durch den Dachziegel 5 und das damit verbundene Energiemodul 300 gebildete Energiepanel 1. Es ist gezeigt, dass die Ziegelstruktur 5 und das Energiemodul 300 optimal aneinander angepasst sind. Selbst nach Fertigstellung des Energiepanels 1 könnte dieses als Ersatz eines konventionellen Dachziegels dienen.

Figur 15 zeigt das Energiemodul 300 von Figur 13 in Explosionsdarstellung. Es ist gezeigt, dass das Metallsubstrat 301 bereits für die Verbindung mit der Ziegelstruktur 5 vorbereitet wurde. Auf einer Isolationsschicht werden Leiterbahnen vorgesehen, durch die die Solarzellen 333 und die Leuchtdioden 352 elektrisch geschaltet werden. Ferner ist das Energiemodul 300 mit einer vorzugsweise trittfesten Schutzschicht 305 abgedeckt.

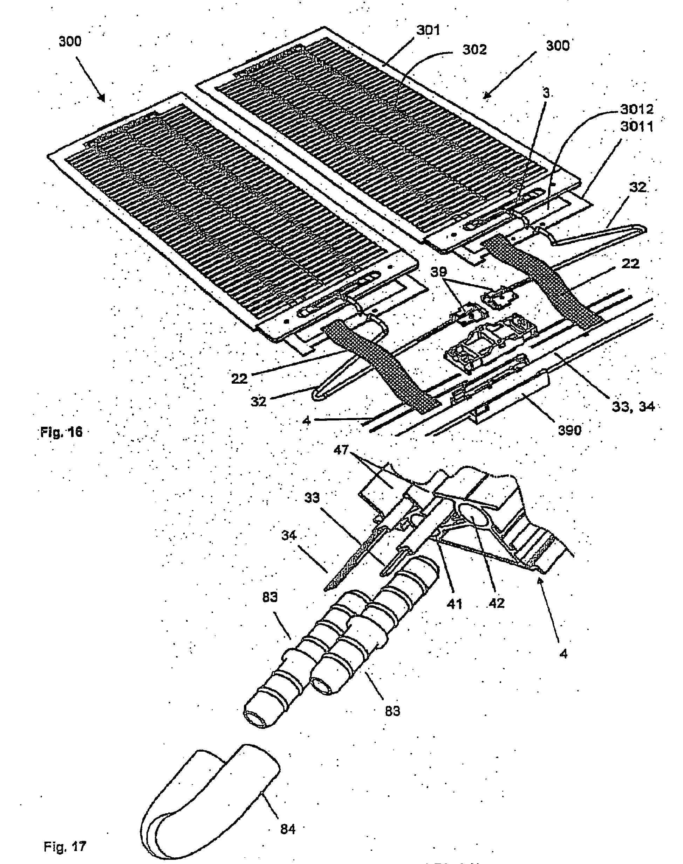

Figur 16 zeigt zwei Energiemodule 300 gemäss Figur 13, die mittels Anschlussleitungen 32 und je einem Verbinder 39 elektrisch mit einer Stromversorgungsleitung 33 und Steuerleitungen 34 verbindbar sind, die vorzugsweise in einem Flachbandkabel integriert sind. Wie erwähnt, kann als Verbinder 39 ein aus [3] bekanntes Verbindungselement verwendet werden, das in eine Anschlussdose 390 eingesetzt wird. Der elektrische Kontakt wird beispielsweise hergestellt, indem Metallschrauben in die Adern des Flachbandkabels 33, 34 eingedreht werden.

Ferner sind bandförmige Kopplungselemente 22 aus Metall gezeigt, wie einerseits mit dem Metallsubstrat 301 des Energiemoduls 300 und andererseits mit der Rohrleitung 4 gekoppelt werden. Möglich ist die Verwendung von Kopplungselementen 22, die einstückig am Metallsubstrat 301 angeformt sind. Ferner können Klemmen, Briden, Klammern und weitere Montagemittel, wie Flanschelemente, Kontaktplatten und Schrauben verwendet werden, um die Kopplungselemente 22 an beiden Enden zu montieren. Durch die Montage der Kopplungselemente 22 erfolgt nicht nur eine thermische, sondern auch eine elektrische Verbindung zwischen den Metallkörpern 301 der Energiepanels 1 und der vorzugsweise geerdeten Rohrleitung 1, so dass nicht nur eine gute thermische Verbindung, sondern auch ein Schutz gegen einwirkende Strahlung und Blitzschlag resultiert.

Figur 17 zeigt eine vorzugsweise Ausgestaltung der Rohrleitung 4 von Figur 7 mit zwei Kabelkanälen 47, die der separaten Führung von Stromleitungen 33 und Steuerleitungen 34 dienen. Ein separater Kabelkanal kann von Vorteil sein, wenn beispielsweise ein Bussystem realisiert werden soll. Gezeigt sind ferner Verbindungselemente 83 und 84, mittels derer die beiden Flüssigkeitskanäle 41 und 42 miteinander verbunden werden.

Figur 18 zeigt auf einem Dach montierte Rohrleitungen 4 gemäss Figur 7, welche die Dachlattung bilden, auf der Energiepanel 1 angeordnet sind. Es ist gezeigt, dass die Ziegelstruktur 5 der Energiepanel 1 mit einer flachen Unterseite 500 an den Trägerplatten 480 flächig anliegen und diese mit einer Nase 54 übergreifen. Der Kabelkanal 47, in den die Stromleitungen 33 und Steuerleitungen 34 eingelegt sind, ist hingegen oberhalb des gehaltenen Energiepanels 1 angeordnet, weshalb die elektrische Verbindung zwischen den genannten Leitungen 33, 34 und dem Energiepanel 1 bei der Installation problemlos vollzogen werden kann. Erst anschliessend wird der Kabelkanal 47 durch ein weiteres Energiepanel 1 abgedeckt.

Figur 19 zeigt den Dachstock 70 eines Gebäudes, auf dem erfindungsgemässe Energiepanel 1 installiert werden. Es ist gut ersichtlich, dass die mit den Dachbalken 7 verbundenen Rohrleitungen 4 die Dachlattung bilden, auf die die Energiepanel 1 in der oben beschriebenen Art aufgesetzt werden.

Wie in Zusammenhang mit Figur 7 erwähnt, werden vorzugsweise zuerst die Montageprofile 8 mit den Dachbalken 7 verbunden. Dabei können einzelne Segmente oder sich über den gesamten Dachstuhl erstreckende Profile verwendet werden. Anschliessend werden die Rohrleitungen 4 in die Montageprofile 7 eingehängt.

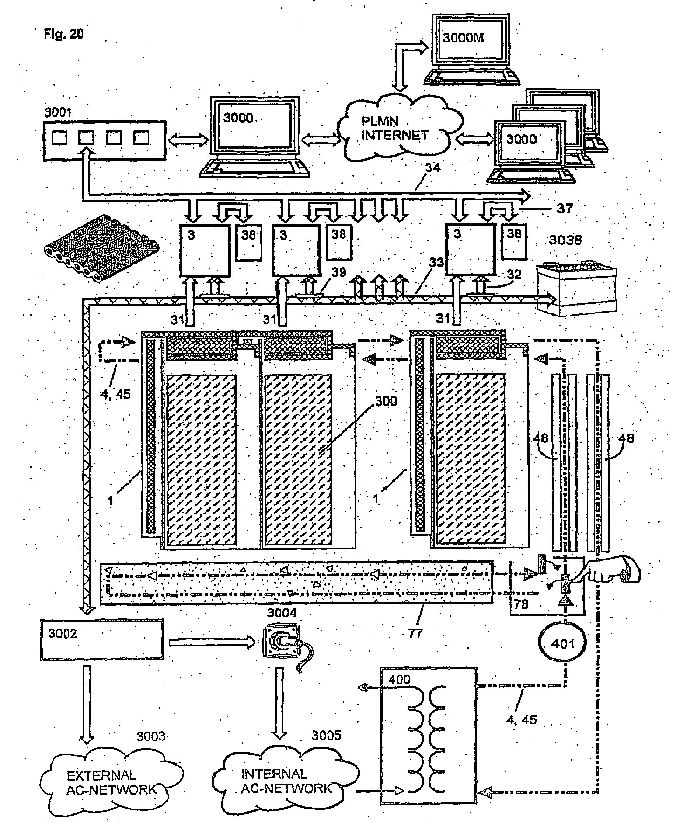

In Figur 20 zeigt ein Blockschaltbild der erfindungsgemässen Energieversorgungsvorrichtung mit Energiepanels 1 gemäss Figur 1, 8, 9, 11 oder 14. In der oberen Bildhälfte ist gezeigt, dass die zentrale Steuereinheit 3000, die vorzugsweise an das Internet oder ein Mobilfunknetz PLMN angeschlossen ist, über ein Netzwerkmodul 3001 und die Datenleitungen 34 mit den lokalen Steuereinheiten 3 verbunden ist. Die zentrale Steuereinheit 3000, beispielsweise ein Personalcomputer, kann daher auch über das Mobilfunknetz oder das Internet gesteuert werden. Beispielsweise werden der zentralen Steuereinheit 3000 meteorologische Daten übermittelt, anhand derer das Energiemanagement des lokalen Energieversorgungssystems bzw. die Energieversorgungsvorrichtung gesteuert wird. Ferner kann der zentralen Steuereinheit 3000 ein Plan mit Terminen mitgeteilt werden, zu denen die gewonnene Energie zu bestmöglichen Konditionen an das öffentliche Netz abgegeben werden kann. Mehrere lokale Energieversorgungssysteme können beispielsweise auch von einer übergeordneten Steuereinheit 3000M koordiniert werden, welcher mit einem Betreiber eines öffentlichen Netzes in Verbindung steht und mit diesem optimale Konditionen für die Lieferung elektrischer Energie aushandeln kann. Die Administration für alle lokalen Energieversorgungssysteme kann in diesem Fall von der übergeordneten Steuereinheit 3000M übernommen werden. Der Betreiber eines lokalen Energieversorgungssystems bleibt von davon entsprechenden Aufwendungen entlastet. An das öffentliche Netz abgegebene Energiemengen werden lokal gemessen und zur zentralen Steuereinheit 3000 gemeldet und von dieser abgerechnet.

In Figur 20 ist ferner gezeigt, dass das Wärmetransportmedium über einen Umschalter 78 auch durch einen gekühlten Bereich, beispielsweise den Erdbereich 77 oder die Sonde einer Wärmepumpe geführt werden kann. Im Sommer kann das Dach des Gebäudes daher mittels des gekühlten Wärmetransportmediums gekühlt werden, so dass sich weitere Kühlvorrichtungen erübrigen.

Die lokalen Steuereinheiten 3 sind ihrerseits über Anschlussleitungen 31 mit den Energiemodulen 300, über Anschlussleitungen 37 mit den lokalen Speichereinheiten 38 und über Anschlussleitungen 32 und einen Verbinder 39 mit der Stromversorgungsleitung 33 verbunden. Die Stromversorgungsleitungen 33 sind einerseits mit einem optional vorgesehenen, zentralen Akkumulator 3038 und andererseits einem mit einem optional vorgesehenen Energiewandler 3002 verbunden, der eine Wechselspannung an ein externes oder internes Wechselspannungsnetz 3003, 3005 und entsprechende Anschlussdosen 3004 abgeben kann. Schematisch ist gezeigt, dass die Stromversorgungsleitungen 33 und Datenleitungen bzw. Steuerleitungen 34 mit einem Flachbandkabel realisiert werden können. Schematisch ist ferner der mittels des Rohrleitungssystems realisierte Kreislauf für das Wärmetransportmedium 45 gezeigt. Gezeigt ist ferner, dass die Elemente des Rohrleitungssystems vorzugsweise mit thermisch isolierenden Materialien 48 versehen sind, so dass auf dem Transportweg keine Energieverluste auftreten.

In den einzelnen Ausführungsbeispielen wurden vorzugsweise Ausgestaltungen der Erfindung beschrieben. Deren Merkmale sind jedoch grundsätzlich miteinander kombinierbar.

### Literaturverzeichnis

[1] JP 2005 241021 A
[2] EP 0 335 261 B1
[3] FLACHKABELSYSTEM TECHNOFIL, Produkteschrift der Woertz AG, Muttenz vom Mai 2004

## Patentansprüche

1. Energieversorgungsvorrichtung mit mehreren als Dachziegel ausgestalteten Energiepanels (1), die ein Teil eines Gebäudes abdecken und die je ein der Aufnahme von Solarenergie dienendes Energiemodul (300) aufweisen, das mit einer Stromversorgungsleitung (33) verbunden ist, **dadurch gekennzeichnet, dass** an einer Aussenseite des Gebäudes wenigstens eine metallene Rohrleitung (4) vorgesehen ist, welche die Energiepanel (1) trägt, die mechanisch und thermisch mit der Rohrleitung (4) verbunden sind, in der ein der Aufnahme der Stromversorgungsleitung (33) dienender Kabelkanal (47) und wenigstens ein Flüssigkeitskanal (41, 42) vorgesehen sind, durch den ein flüssiges Wärmetransportmedium (45) führbar ist, durch das thermische Energie vom Energiepanel (1) zu einer Wärmeenergiesenke (400) transferierbar ist.

2. Energieversorgungsvorrichtung nach Anspruch 1, **dadurch gekennzeichnet, dass** mehrere aus Aluminium gefertigte Rohrleitungen (4), die parallel zueinander auf dem Dachstuhl (70) des Gebäudes montiert sind, eine dem Tragen der Dachziegel (1) dienende Dachlattung bilden, und dass die Rohrleitung (4) einen ersten Flüssigkeitskanal (41), in dem das Wärmetransportmedium (45) in eine Richtung geführt wird, und einen zweiten Flüssigkeitskanal (42) aufweist, in dem das Wärmetransportmedium (45) zurückgeführt wird.

3. Energieversorgungsvorrichtung nach Anspruch 1 oder 2, **dadurch gekennzeichnet, dass** jedes Energiepanel (1) ein mit dem Energiemodul (300) verbundenes Anschlusskabel (32) mit einem Verbinder (39) aufweist, der mit einem im Kabelkanal (47) geführten Flachbandkabel verbindbar ist, welches die Stromversorgungsleitung (33) und/oder Steuerleitungen (34) umfasst, wobei die einzelnen Energiemodule (300) durch die Stromversorgungsleitung (33) vorzugsweise parallel miteinander verbunden sind.

4. Energieversorgungsvorrichtung nach Anspruch 1, 2 oder 3, **dadurch gekennzeichnet, dass** die Rohrleitung (4) ein Profil mit zwei über eine Basisstruktur (400) miteinander verbundenen Rohrteilen (410, 420) aufweist, in denen der erste bzw. zweite Flüssigkeitskanal (41, 42) geführt sind, wobei auf dem ersten Rohrteil (410) ein den Kabelkanal (47) führendes erstes Profilteil (470) und auf dem zweiten Rohrteil (420) eine Trägerplatte (480) angeordnet ist, an dessen Oberseite die Energiepanel (1) flächig anliegen.

5. Energieversorgungsvorrichtung nach einem der Ansprüche 1-4, **dadurch gekennzeichnet, dass** eine Kopplungsvorrichtung (22) vorgesehen ist, die einerseits mit einem Metallkörper (2, 301) des Energiepanels (1) und andererseits mit der Rohrleitung (4) verbunden ist, wodurch eine thermische und/oder mechanische Verbindung resultiert.

6. Energieversorgungsvorrichtung nach einem der Ansprüche 1-5, **dadurch gekennzeichnet, dass** zumindest eines der Energiepanel (1) mit einer lokalen Steuereinheit (3) versehen ist, die über Steuerleitungen (34) mit einer zentralen Steuereinheit (3000) verbunden und die zur Steuerung des vom Energiemodul (300) abgegebenen Stromes, hin zu wenigstens einem im Energiepanel (1) vorgesehenen lokalen Stromabnehmer, einer Stromspeichereinheit (38) oder Leuchtdioden (352), oder hin zu wenigstens einem zentralen Stromabnehmer (3003; 3005; 3038), geeignet ist.

7. Energieversorgungsvorrichtung nach einem der Ansprüche 1-6, **dadurch gekennzeichnet, dass** die Rohrleitungen (4) an deren Unterseite mit einer Kopplungsnut (432) versehen sind, in der ein Montageprofil (8, 81, 82) fest oder verschiebbar gehalten ist, durch das die Rohrleitungen (4) miteinander und/oder mit dem Dachstuhl (70) verbunden sind.

8. Energiepanel (1) in der Ausgestaltung eines Dachziegels, für eine Energieversorgungsvorrichtung nach einem der Ansprüche 1-7, mit einem der Aufnahme von Solarenergie dienenden Energiemodul (300), das über eine Anschlussleitung (32) mit einer Stromversorgungsleitung (33) verbindbar ist, **dadurch gekennzeichnet, dass** eine Ziegelstruktur (5) aus Ton oder Metall in der Form eines Dachziegels vorgesehen ist, an deren Oberseite ein Aufnahmebereich (50) für das Energiemodul (300) vorgesehen ist, welches einen plattenförmigen Metallkörper (301) aufweist, der mit der Ziegelstruktur (5) lösbar verbunden ist und auf dem Solarzellen (333) angeordnet sind.

9. Energiepanel (1) nach Anspruch 8, **dadurch gekennzeichnet, dass** die Ziegelstruktur (5) wenigstens ein Halteelement (58, 59) aufweist, welches das Energiemodul (300) formschlüssig hält und/oder dass die Ziegelstruktur (5) einen Kabelkanal (591) aufweist, in den die Anschlussleitung (32) eingelegt ist.

10. Energiepanel (1) nach Anspruch 8 oder 9, **dadurch gekennzeichnet, dass** die Ziegelstruktur (5) an der Unterseite eine flache Zone (500) aufweist, die zu einem plattenförmigen Trägerelement (480) der Rohrleitung (4) korrespondiert.

11. Energiepanel (1) nach Anspruch 9 oder 10, **dadurch gekennzeichnet, dass** der Metallkörper (301) am oberen Ende einen Rahmen (3011) mit einer Öffnung (3012) aufweist, in die eines der Halteelemente (59) eingreift und/oder dass der Metallkörper (301) am unteren Ende eine vorzugsweise biegbare Zunge (3013) aufweist, welche das untere Ende der Ziegelstruktur (5) umgreift.

12. Energiepanel (1) nach einem der Ansprüche 8-11, **dadurch gekennzeichnet, dass** das Energiemodul (300) wenigstens einen lokalen Stromabnehmer aufweist, wie eine lokale Stromspeichereinheit (38) und/oder wenigstens eine Leuchtdiode (352), die als Verbraucher und/oder Signalgeber dient.

13. Energiepanel (1) nach einem der Ansprüche 8-12, **dadurch gekennzeichnet, dass** das Energiemodul (300) wenigstens eine lokale Steuereinheit (3) aufweist, die über Steuerleitungen (34) mit einer zentralen Steuereinheit (3000) verbindbar und zur Steuerung des vom Energiemodul (300) abgegebenen Stromes einerseits hin zum lokalen Stromabnehmer (38, 352) oder hin zu wenigstens einem zentralen Stromabnehmer (3003; 3005; 3038) geeignet ist.

14. Energiepanel (1) nach einem der Ansprüche 8-13, **dadurch gekennzeichnet, dass** das Energiemodul (300) als Laminat aufgebaut ist, mit dem Metallkörper (301) als Substratschicht, auf der eine von einer transparenten Schutzschicht (305) abgedeckte Funktionsschichtschicht (302) angeordnet ist, auf der die lokale Steuereinheit (3), sowie Solarzellen (333) und gegebenenfalls die durch weitere Energiemodule (1) nicht abzudeckende Leuchtdioden (352) angeordnet sind.

15. Energiepanel (1) nach einem der Ansprüche 8-14, **dadurch gekennzeichnet, dass** die lokale Steuereinheit (3) derart ausgestaltet oder derart schaltbar ist, dass das Energiemodul (300) nach der Entkopplung des Energiepanels (1) von der Stromleitung (33) mit den Leuchtdioden (352) verbunden ist, welche die erzeugte Energie konsumieren und gleichzeitig den Zustand des Energiepanels (1) anzeigen.

16. Dachziegel (5) aus Ton für ein Energiepanel nach einem der Ansprüche 8-15.

## Claims

1. Energy supply device with a plurality of energy panels (1) provided as roof tiles, which cover a part of a building and comprise each an energy module (300) that is serving to absorb solar energy and that is connected to a power supply line (33), **characterised in that** at least one metal pipeline (4) is provided on an outer side of the building that supports the energy panels (1), which are mechanically and thermally connected to the pipeline (4), which comprises a cable channel (47), serving to receive the power supply line (33), and at least one fluid channel (41, 42), through which a fluid heat transport medium (45) can be conveyed, with which thermal energy can be transferred from the energy panel (1) to a thermal energy sink (400).

2. Energy supply device according to claim 1, **characterised in that** a plurality of pipelines (4) produced from aluminium, which are mounted parallel to each other on the roof truss (70) of the building, form a roof lathing serving to support the roof tiles (1), and **in that** the pipeline (4) comprises a first fluid channel (41), in which the heat transport medium (45) is guided in one direction, and a second fluid channel (42), in which the heat transport medium (45) is returned.

3. Energy supply device according to claim 1 or 2, **characterised in that** each energy panel (1) comprises a connecting cable (32) connected to the energy module (300) having a connector (39), which can be connected to a flat cable guided in the cable channel (47), which flat cable includes the power supply line (33) and/or control lines (34), wherein the individual energy modules (300) are preferably connected to each other in parallel by the power supply line (33).

4. Energy supply device according to claim 1, 2 or 3, **characterised in that** the pipeline (4) comprises a profile with two pipe parts (410, 420) connected to each other via a base structure (400), in which the first and second fluid channels (41, 42) are respectively guided, whereby on the first pipe part (410) a first profile part (470) forming the cable channel (47) is arranged and on the second pipe part (420) a carrier plate (480) is arranged, against the upper side of which the energy panels (1) lie planar.

5. Energy supply device according to one of the claims 1 - 4, **characterised in that** a coupling device (22) is provided, which is connected on the one hand to a metal body (2, 301) of the energy panel (1) and on the other hand to the pipeline (4), whereby a thermal and/or mechanical connection is produced.

6. Energy supply device according to one of the claims 1 - 5, **characterised in that** at least one of the energy panels (1) is provided with a local control unit (3), which is connected via control lines (34) to a central control unit (3000) and which is adapted to control the current output by the energy module (30) to at least one local current collector provided in the energy panel (1), a power storage unit (38) or light emitting diodes (352), or to at least one central current collector (3003; 3005; 3038).

7. Energy supply device according to one of the claims 1 - 6, **characterised in that** the pipelines (4) are provided on the lower side thereof with a coupling groove (432), in which a mounting profile (8, 81, 82) is fixedly or displaceably held, by which the pipelines (4) are connected to each other and/or to the roof truss (70).

8. Energy panel (1) in the form of a roof tile, in particular for an energy supply device according to one of the claims 1 - 7, with an energy module (300) serving to absorb solar energy, which energy module (300) can be connected via a connecting line (32) to a power supply line (33), **characterised in that** a tile structure (5) made of clay or metal in the form of a roof tile is provided, on the upper side of which a receiving area (50) for the energy module (300) is provided, which energy module (300) comprises a metal body (301) in the form of a metal plate, which is releasably connected to the tile structure (5) and on which solar cells (333) are arranged.

9. Energy panel (1) according to claim 8, **characterised in that** the tile structure (5) comprises at least one holding element (58, 59), which holds the energy module (300) in a shape-locking way and/or **in that** the tile structure (5) comprises a cable channel (591), in which the connecting line (32) is laid.

10. Energy panel (1) according to claim 8 or 9, **characterised in that** the tile structure (5) comprises on the bottom side a flat zone (500), which corresponds to a plate-form carrier element (480) of the pipeline (4).

11. Energy panel (1) according to claim 9 or 10, **characterised in that** the metal body (301) comprises at the upper end a frame (3011) with an opening (3012), into which one of the holding elements (59) engages, and/or **in that** the metal body (301) comprises at the lower end a preferably bendable tongue element (3013), which engages around the lower end of the tile structure (5).

12. Energy panel (1) according to one of the claims 8 - 11, **characterised in that** the energy module (300) comprises at least one local current collector, such as a local energy storage unit (38) and/or at least one light emitting diode (352), which serves as a consumer load and/or signal emitter.

13. Energy panel (1) according to one of the claims 8 - 12, **characterised in that** the energy module (300) comprises at least one local control unit (3), which can be connected via control lines (34) to a central control unit (3000) and is adapted to control the current output by the energy module (300) on the one hand towards the local current collector (38, 352) or towards at least one central current collector (3003; 3005; 3038).

14. Energy panel (1) according to one of the claims 8 - 13, **characterised in that** the energy module (300) is structured as a laminate, with the metal body (3010) as a substrate layer, on which a functional layer (302) covered by a transparent protective layer (305) is arranged, on which the local control unit (3) and also solar cells (333) and possibly the light emitting diodes (352), which are not covered by further energy modules (1), are arranged.

15. Energy panel (1) according to one of the claims 8 - 14, **characterised in that** the local control unit (3) is designed or connectable in such a way that the energy module (300), after disconnection of the energy panel (1) from the power line (33), is connected to the light emitting diodes (352), which consume the energy generated and simultaneously indicate the status of the energy panel (1).

16. Roof tile (5), made of clay, for an energy panel according to one of the claims 8 - 15.

## Revendications

1. Dispositif d'alimentation d'énergie avec plusieurs panneaux énergétiques en forme de tuile (1) qui recouvrent une partie d'un bâtiment et qui présentent chacun un module énergétique (300) servant à l'absorption de l'énergie solaire, qui est relié à une ligne d'alimentation en énergie (33), **caractérisé en ce qu'**il est prévu sur une face externe du bâtiment au moins une conduite métallique (4) qui porte les panneaux énergétiques (1) reliés thermiquement et mécaniquement à la conduite (4) dans laquelle il est prévu un canal de câble (47) servant au logement de la ligne d'alimentation en courant (33) et au moins un canal de liquide (41, 42), à travers lequel peut être guidé un flux de fluide caloporteur (45) qui permet de transférer l'énergie thermique du panneau énergétique (1) à un dissipateur thermique de chaleur (400).

2. Dispositif d'alimentation d'énergie selon la revendication 1, **caractérisé en ce que** plusieurs conduites en aluminium (4) qui sont montées parallèles entre elles sur la charpente (70) du bâtiment, forment des liteaux servant à porter les tuiles (1) et **en ce que** la conduite (4) présente un premier canal de liquide (41) dans lequel est guidé le flux de fluide caloporteur (45) dans une direction et un second canal de liquide (42) dans lequel le flux de fluide caloporteur (45) est remis en circulation.

3. Dispositif d'alimentation d'énergie selon la revendication 1 ou 2, **caractérisé en ce que** chaque panneau énergétique (1) présente un câble de raccordement (32) relié au module énergétique (300) avec un connecteur (39) qui est reliable à un câble plat guidé dans le canal de câble (47), lequel comprend la ligne d'alimentation en énergie (33) et/ou les lignes de commande (34), chacun des modules énergétiques (300) étant relié entre eux de préférence parallèlement par la ligne d'alimentation en courant (33).

4. Dispositif d'alimentation d'énergie selon la revendication 1, 2 ou 3, **caractérisé en ce que** la conduite (4) présente un profil avec deux parties de conduite (410, 420) reliées ensemble par une structure de base (400), dans lesquelles sont guidés le premier respectivement le second canal de liquide (41, 42), sur la première partie de conduite (410) étant disposée une première partie de profil (470) guidant le canal de câble (47) et sur la seconde partie de conduite (420) étant appliquée une plaque support (480) contre la face supérieure de laquelle s'appliquent les panneaux énergétiques (1) à plat.

5. Dispositif d'alimentation d'énergie selon l'une des revendications 1 à 4, **caractérisé en ce qu'**il est prévu un dispositif d'accouplement (22) qui est relié d'une part à un corps métallique (2, 301) du panneau énergétique (1) et d'autre part à la conduite (4) ce qui établit une connexion thermique et/ou mécanique.

6. Dispositif d'alimentation d'énergie selon l'une des revendications 1 à 5, **caractérisé en ce qu'**au moins un des panneaux énergétiques (1) est muni d'une unité de commande locale (3) qui est reliée par des lignes de commande (34) à une unité de commande centrale (3000) et qui est appropriée pour la commande du courant délivré par le module énergétique (300) à au moins un récepteur de courant local prévu dans le panneau énergétique (1), à une unité de stockage de courant (38) ou des diodes lumineuses (352) ou à au moins un récepteur de courant central (3003; 3005; 3038).

7. Dispositif d'alimentation d'énergie selon l'une des revendications 1 à 6, **caractérisé en ce que** les conduites (4) sont munies sur leur face inférieure d'une rainure d'accouplement (432) dans laquelle est maintenu un profilé de montage (8, 81, 82) fixement et coulissant et qui relie les conduites (4) entre elles et/ou avec la charpente (70).

8. Panneau énergétique (1) sous forme d'une tuile, en particulier pour un dispositif d'alimentation d'énergie selon l'une des revendications 1 à 7, avec un module énergétique (300) servant à la réception de l'énergie solaire, lequel peut être relié par une ligne de raccordement (32) à une ligne d'alimentation de courant (33), **caractérisé en ce qu'**une structure de tuile (5) en argile ou métal est prévue sous forme d'une tuile sur la face supérieure de laquelle est prévue une zone de réception (50) pour le module énergétique (300) qui présente un corps métallique en forme de plaque (301) relié de manière amovible à la structure de tuile (5) et sur lequel sont disposées des piles solaires (333).

9. Panneau énergétique (1) selon la revendication 8, **caractérisé en ce que** la structure de tuile (5) présente au moins un élément de retenue (58; 59) qui retient le module énergétique (300) par adhérence de forme et/ou **en ce que** la structure de tuile (5) présente un canal de câble (591) dans lequel est introduite la ligne de raccordement (32).

10. Panneau énergétique (1) selon la revendication 8 ou 9, **caractérisé en ce que** la structure de tuile (5) présente sur la face inférieure une zone plate (500) qui correspond à un élément porteur (480) en forme de plaque de la conduite (4).

11. Panneau énergétique (1) selon la revendication 9 ou 10, **caractérisé en ce que** le corps métallique (301) présente sur l'extrémité supérieure un cadre (3011) avec une ouverture (3012) dans laquelle s'engage l'un des éléments de retenue (59) et/ou **en ce que** le corps métallique (301) présente sur l'extrémité inférieure une languette (3013) de préférence flexible qui entoure l'extrémité inférieure de la structure de tuile (5).

12. Panneau énergétique (1) selon l'une des revendications 8 à 11, **caractérisé en ce que** le module énergétique (300) présente au moins un récepteur local de courant, tel qu'une unité locale de stockage de courant (38) et/ou au moins une diode lumineuse (352) qui sert de poste consommateur et/ou d'émetteur de signaux.

13. Panneau énergétique selon l'une des revendications 8 à 12, **caractérisé en ce que** le module énergétique (300) présente au moins une unité de commande locale (3) qui est reliée par des lignes de commande (34) à une unité de commande centrale (3000) et qui est appropriée pour la commande du courant délivré par le module énergétique (300) à au moins un récepteur de courant local (38; 352) ou à au moins un récepteur de courant central (3003; 3005; 3038).

14. Panneau énergétique (1) selon l'une des revendications 8 à 13, **caractérisé en ce que** le module énergétique (300) est réalisé comme un stratifié avec le corps métallique (301) en tant que couche substrat sur laquelle est disposée une couche de fonction (302) recouverte d'une couche transparente de protection (305) sur laquelle sont disposées l'unité locale de commande (3) ainsi que des piles solaires (333) et éventuellement les diodes lumineuses (352) ne devant pas être recouvertes par d'autres modules énergétiques (1).

15. Panneau énergétique (1) selon l'une des revendications 8 à 14, **caractérisé en ce que** l'unité de commande locale (3) est réalisée et/ou commandable de sorte que le module énergétique (300) est relié après le désaccouplement du panneau énergétique (1) de la ligne de courant (33) aux diodes lumineuses (352) qui consomment l'énergie produite et indiquent en même temps l'état du panneau énergétique (1).

16. Tuile de toit (5) en argile pour un panneau énergétique selon l'une des revendications 8 à 15.
